# EUROPEAN PATENT SPECIFICATION

(11) **EP 3 929 013 B1**
(45) Date of publication and mention of the grant of the patent: **08.06.2022**
(21) Application number: 21175915.4
(22) Date of filing: 26.05.2021
(51) Int. Cl.: B60K 15/03, B60K 15/035

(54) **STRADDLED VEHICLE**
GRÄTSCHSITZFAHRZEUG
VÉHICULE À ENFOURCHER

(30) Priority: 23.06.2020 JP 2020107785
(43) Date of publication of application: 29.12.2021
(73) Proprietor: YAMAHA HATSUDOKI KABUSHIKI KAISHA, Iwata-shi, Shizuoka 438-8501 (JP)
(72) Inventor: TACHIBANA, Masumi, Shizuoka-ken, 4388501 (JP)
(74) Representative: Moreland, David

(56) References cited:
- WO-A1-2018/065892
- JP-A- 2010 179 744
- JP-A- 2012 202 229
- JP-A- 2015 089 713
- US-B2- 8 210 305

## Description

### FIELD OF INVENTION

The present invention relates to a straddled vehicle including a rollover valve.

### BACKGROUND TO INVENTION

A straddled vehicle is equipped with a fuel tank. For example, in a straddled vehicle disclosed in Japan Laid-open Patent Application Publication No. JP-A-2015-89713 (YAMAHA MOTOR), a fuel tank is arranged in front of a seat. A fuel filler port is provided on an upper surface of the fuel tank, and the fuel filler port is opened and closed by a cap. Further, in a straddled vehicle of Japan Laid-open Patent Application Publication No. JP-A-2010-179744 (YAMAHA MOTOR), an intake pipe is connected to an upper surface of the fuel tank. The intake pipe is welded to the upper surface of the fuel tank. The intake pipe projects upward from the upper surface of the fuel tank and bends sideways. The intake pipe is connected to a canister via a charge hose. A rollover valve is connected to the charge hose. The rollover valve is opened when a pressure in the fuel tank exceeds a predetermined value. The rollover valve is closed when the pressure in the fuel tank is less than the predetermined value. The rollover valve prevents an outflow of fuel in the fuel tank when the vehicle falls.

As described above, when the intake pipe is connected to the upper surface of the fuel tank, a large gap is required between the fuel tank and a cover covering the fuel tank. As a result, the vehicle becomes large in the vicinity of the fuel tank. Alternatively, the capacity of the fuel tank becomes small in order to secure the space for the intake pipe described above while preventing the vehicle from becoming large in size.

It is an object of at least one embodiment of at least one aspect of the present invention to seek to obviate or at least mitigate one or more problems or disadvantages in the prior art.

The object of the present invention is to seek to secure a large capacity of a fuel tank in a straddled vehicle in which a rollover valve is arranged outside the fuel tank, while suppressing an increase in size of the straddled vehicle.

WO 2018/065892 A1 (TVS MOTOR CO LTD) describes an evaporative emission control assembly for a two-wheeled vehicle. The evaporative emission control assembly includes a container disposed at a close proximity to a fuel tank assembly disposed at the rear end of the vehicle. The evaporative emission control assembly (109) is disposed at a proximity to the fuel tank assembly (112), rearwardly to at least one rear suspension and above disposed above a rear portion of an engine assembly. The location of the container facilitates improved adsorption of the fuel vapour in a fuel hose of the fuel tank assembly.

JP 2012/202229 (HONDA MOTOR CO LTD) describes an evaporated fuel treatment device which can treat evaporated fuel by using a fuel supply cap, treat the evaporated fuel without enlarging the fuel supply cap, and also appropriately prevent the outflow of fuel. In a cylindrical part formed in a fuel supply cap, a positive pressure adjusting valve is provided which opens when an inner pressure of a fuel tank becomes a predetermined pressure or more. At a fuel tank internal side of the cylindrical part, a spherical rollover valve is provided which closes the positive pressure adjusting the valve when the fuel tank is inclined at an angle equal to or larger than a predetermined angle.

US 8210305 B2 (YAMAHA MOTOR CO LTD ET AL) describes a motorcycle which can include an engine, a fuel tank, a seat, and a canister. The fuel tank can have an upper surface and an inclined surface arranged to extend obliquely downward from a rear end of the upper surface toward a back of the motorcycle. The seat can include a seat front portion and a seat rear portion. The seat front portion can be provided on the inclined surface, and the seat rear portion can extend toward the back of the motorcycle. The canister can be arranged between the inclined surface and the seat front portion. The canister can store fuel gas generated in the fuel tank, and supply the fuel gas to the engine. At least one of the inclined surface and the lower surface can have a first cavity that stores the canister.

### SUMMARY OF INVENTION

Various aspects of the present invention are defined in the independent claims appended hereto. Some optional and/or preferred features are defined in the dependent claims.

According to the present invention there is provided a straddled vehicle according to claim 1.

According to the straddled vehicle according to the present invention the rollover valve is sandwiched between the support and the fuel tank, so that the rollover valve may be directly connected to the tank intake port without passing through the intake pipe. Therefore, the cover can be arranged closer to the fuel tank as compared with a case where the intake pipe is provided on an upper surface of the fuel tank. As a result, it may be possible to secure a large capacity of the fuel tank while suppressing the increase in size of the straddled vehicle.

The rollover valve may overlap the tank intake port as seen in an axial direction of the fuel filler port. In this case, the rollover valve can be directly connected to the tank intake port. As a result, the increase in size of the vehicle can be suppressed.

The rollover valve may overlap with the support as seen in the axial direction of the filler port. In this case, the rollover valve and the support are compactly arranged. As a result, the increase in size of the vehicle can be suppressed.

The rollover valve may include a valve body and a connecting pipe. The valve body may include the valve intake port. The connecting pipe may project from the valve body and connected to the charge hose. The valve body may overlap with the support as seen in the axial direction of the fuel filler port. The connecting pipe may project from the support as seen in the axial direction of the fuel filler port. In this case, the rollover valve and the support may be compactly arranged. As a result, the increase in size of the vehicle can be suppressed.

The support may comprise or include a main body, a first boss, and a second boss. The main body may have an annular shape. The first boss may project from the main body and connected to the fuel tank. The second boss may project from the main body. The second boss may be arranged apart from the first boss in a circumferential direction of the main body. The second boss may be connected to the fuel tank. The rollover valve may be arranged between the first boss and the second boss. In this case, the rollover valve and the support are compactly arranged. As a result, the increase in size of the vehicle can be suppressed.

The rollover valve may be fixed to a lower surface of the main body. In this case, the rollover valve and the support may be compactly arranged. As a result, the increase in size of the vehicle can be suppressed.

The support may comprise or include an opening that has a circular shape and faces the fuel filler port. The rollover valve may comprise or include an inner side surface that is curved along an edge of the opening. In this case, the rollover valve and the support may be compactly arranged. As a result, the increase in size of the vehicle can be suppressed.

The support may have a circular outer shape. The rollover valve may comprise or include an outer side surface that may be curved along an outer shape of the support. In this case, the rollover valve and the support may be compactly arranged. As a result, the increase in size of the vehicle can be suppressed.

A lower surface of the support may comprise or include a recess that is recessed upward. A part of the rollover valve may be located in the recess. In this case, the rollover valve and the support may be compactly arranged. As a result, the increase in size of the vehicle can be suppressed.

The straddled vehicle may further comprise or include a seal member. The seal member may be arranged between the tank intake port and the valve intake port. The seal member may be compressed between the rollover valve and the fuel tank by attaching the support to the fuel tank. In this case, good sealing performance can be obtained by utilizing an attachment force of the support to the fuel tank.

The straddled vehicle may comprise or include a head pipe, a seat, a storage box, a center cover, and a power unit. The head pipe may be located in front of the fuel tank. At least a part of the seat may be located behind the fuel tank. The storage box may be located below the seat and behind the fuel tank. The center cover may be arranged between the head pipe and the seat. The center cover may have a downwardly recessed shape between the fuel tank and the head pipe. The power unit may be located below the fuel tank.

### BRIEF DESCRIPTION OF DRAWINGS

One or more embodiments of the present invention will now be described, by way of example only, with reference to the accompanying drawings, which are:
- **FIG. 1**: a left side view of a straddled vehicle according to an embodiment;
- **FIG. 2**: a top view of the straddled vehicle;
- **FIG. 3**: a perspective view of a fuel cap unit;
- **FIG. 4**: a perspective view of the fuel cap unit;
- **FIG. 5**: a cross-sectional view of a fuel tank and its surroundings;
- **FIG. 6**: a perspective view of the fuel cap unit;
- **FIG. 7**: a perspective view of the fuel cap unit;
- **FIG. 8**: a perspective view of the fuel cap unit;
- **FIG. 9**: an exploded view of the fuel cap unit;
- **FIG. 10**: an exploded view of a cap and an operating member;
- **FIG. 11**: a perspective view of the fuel cap unit in which an upper cover is omitted;
- **FIG. 12**: a perspective view of the fuel cap unit in which the upper cover and an inner cover are omitted;
- **FIG. 13**: a top view of the fuel cap unit in which the upper cover and the inner cover are omitted;
- **FIG. 14**: a top view of the fuel cap unit in which the upper cover and the inner cover are omitted;
- **FIG. 15**: a top view showing a part of the fuel cap unit;
- **FIG. 16**: a top view showing a part of the fuel cap unit;
- **FIG. 17**: an enlarged top view showing a part of the fuel cap unit;
- **FIG. 18**: a perspective view showing a part of the fuel cap unit;
- **FIG. 19**: a top view showing a part of the fuel cap unit;
- **FIG. 20**: a side view showing a part of the fuel cap unit;
- **FIG. 21**: a side view showing a part of the fuel cap unit;
- **FIG. 22**: a block diagram showing a control system for the straddled vehicle;
- **FIG. 23**: an enlarged top view showing a part of the fuel cap unit;
- **FIG. 24**: an enlarged top view showing a part of the fuel cap unit;
- **FIG. 25**: a perspective view of a part of the fuel tank and the fuel cap unit;
- **FIG. 26**: a cross-sectional view of a part of the fuel tank and the fuel cap unit;
- **FIG. 27**: a right-side view of the straddled vehicle;
- **FIG. 28**: a perspective view of a rollover valve;
- **FIG. 29**: a top view of the rollover valve;
- **FIG. 30**: a cross-sectional view of the rollover valve in a first open state;
- **FIG. 31**: a top view of a part of a support and the rollover valve;
- **FIG. 32**: a perspective view of the fuel cap unit;
- **FIG. 33**: a bottom view of the support;
- **FIG. 34**: a bottom view of the fuel cap unit;
- **FIG. 35**: a cross-sectional view of the rollover valve in the second open state; and
- **FIG. 36**: a cross-sectional view of the rollover valve in a closed state.

### DETAILED DESCRIPTIONN OF DRAWINGS

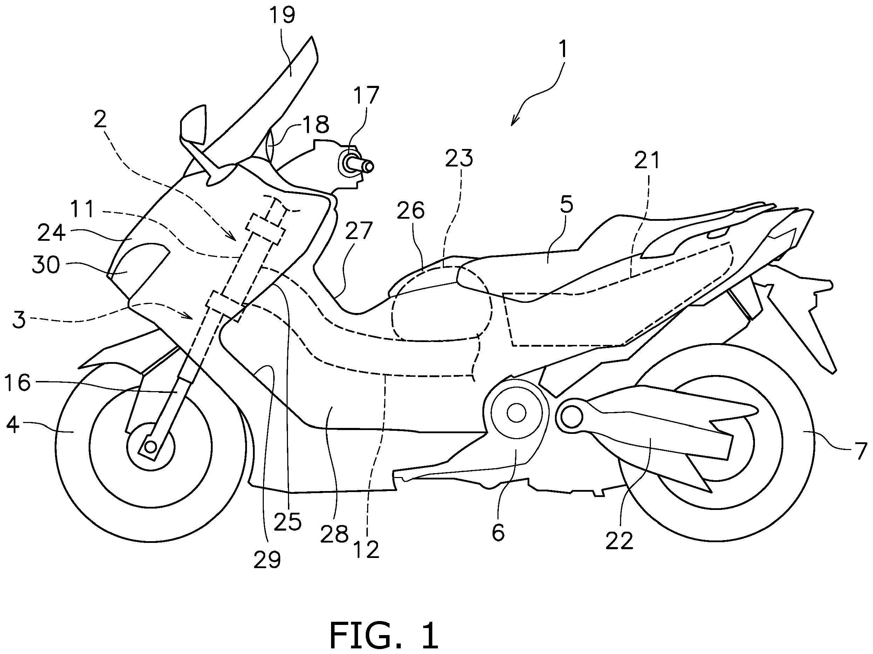

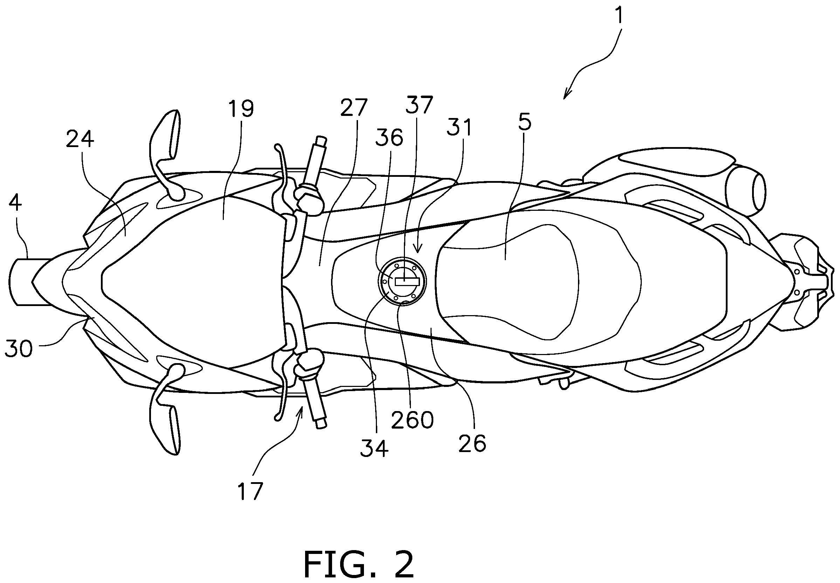

Hereinafter, a straddled vehicle according to an embodiment of the present invention will be described with reference to the drawings. FIG. 1 is a left side view of the straddled vehicle 1 according to the embodiment. FIG. 2 is a top view of the straddled vehicle 1. The straddled vehicle 1 according to the present embodiment is a scooter. As illustrated in FIG. 1, the straddled vehicle 1 includes a vehicle body frame 2, a steering device 3, a front wheel 4, a seat 5, a power unit 6, and a rear wheel 7. In the following description, the front-rear, left-right directions are defined as the directions as seen in a rider seated on the seat 5.

The vehicle body frame 2 includes a head pipe 11 and a main frame 12. The head pipe 11 is arranged at a center in the left-right direction of the vehicle. The head pipe 11 extends forward and downward. The main frame 12 extends rearward from the head pipe 11.

The steering device 3 is turnably supported by the head pipe 11. The steering device 3 rotatably supports the front wheel 4. The steering device 3 includes a front fork 16 and a handle member 17. The front fork 16 is turnably supported by the head pipe 11. The front wheel 4 is rotatably supported by the front fork 16.

The handle member 17 is operable by a rider to rotate the front wheel 4. The handle member 17 is connected to the front fork 16. The handle member 17 extends in the left-right direction. A meter panel 18 is arranged in front of the handle member 17. The meter panel 18 includes, for example, a speedometer. A windshield 19 is arranged in front of the meter panel 18.

The seat 5 is arranged behind the head pipe 11. The seat 5 is arranged above the main frame 12. A storage box 21 is arranged below the seat 5. The power unit 6 is arranged below the seat 5. The power unit 6 is arranged below the storage box 21. The power unit 6 includes an internal combustion engine. The power unit 6 is supported by the main frame 12. The rear wheel 7 is rotatably supported by the swing arm 22. The swing arm 22 is swingably supported by the main frame 12 or the power unit 6.

The straddled vehicle 1 includes a fuel tank 23. The fuel tank 23 is arranged between the head pipe 11 and the seat 5. The fuel tank 23 is arranged above the main frame 12. The fuel tank 23 is supported by the main frame 12. The head pipe 11 is arranged in front of the fuel tank 23. At least a part of the seat 5 is located behind the fuel tank 23. A part of the seat 5 may overlap with the fuel tank 23 as seen in a vehicle top view. The storage box 21 is arranged behind the fuel tank 23. The power unit 6 is arranged below the fuel tank 23.

The straddled vehicle 1 includes a front cover 24, a leg shield 25, a tank cover 26, a center cover 27, and a side cover 28. The front cover 24 is arranged in front of and on the left and right sides of the head pipe 11. A headlight 30 is arranged on the front cover 24. The leg shield 25 is arranged behind the front cover 24. A footrest 29 is arranged behind the leg shield 25. The footrest 29 has a flat shape and extends rearward from a lower portion of the leg shield 25.

The tank cover 26 covers the fuel tank 23 from above. The tank cover 26 overlaps with the fuel tank 23 as seen in the vehicle top view. The tank cover 26 is arranged in front of the seat 5. The tank cover 26 is arranged between the center cover 27 and the seat 5. The center cover 27 is arranged above the main frame 12. The center cover 27 is arranged between the head pipe 11 and the seat 5. The center cover 27 is arranged between the head pipe 11 and the tank cover 26. The center cover 27 has a shape recessed downward between the fuel tank 23 and the head pipe 11.

The side cover 28 is arranged below the seat 5. The side cover 28 covers at least a part of the power unit 6 from the lateral side. The footrest 29 is connected to a lower end of the side cover 28. The footrest 29 projects laterally from the side cover 28.

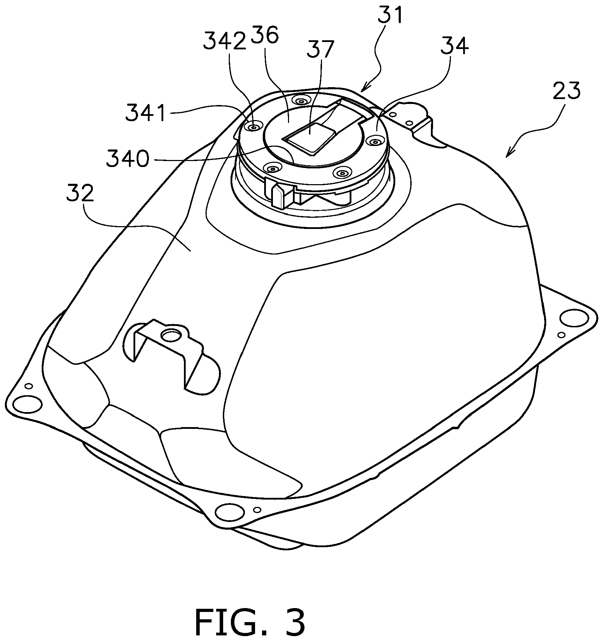

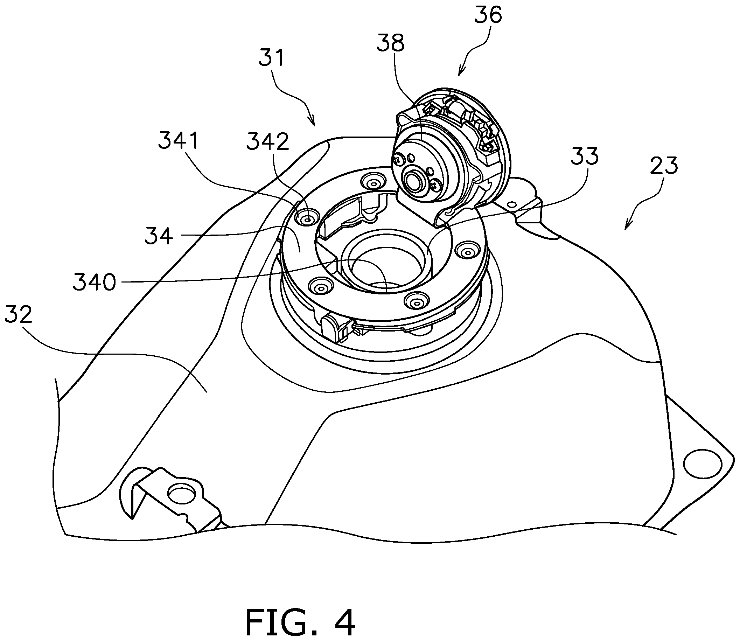

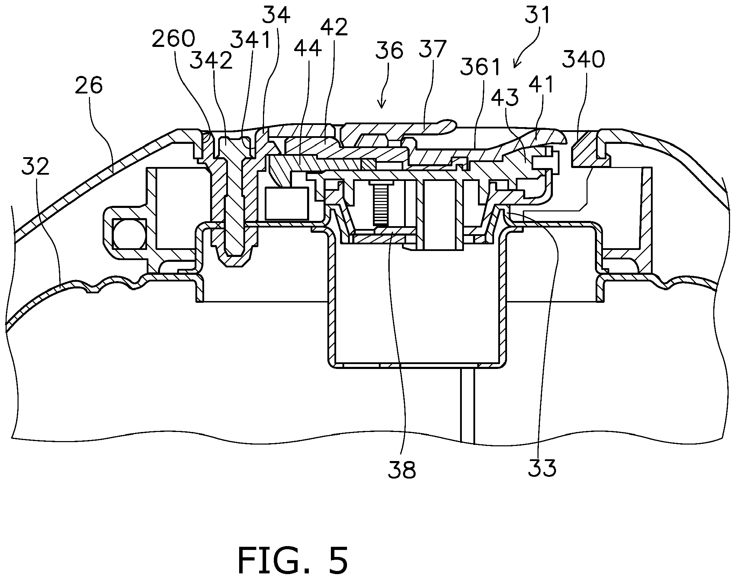

The straddled vehicle 1 includes a fuel cap unit 31. FIGS. 3 and 4 are perspective views of the fuel cap unit 31. FIG. 5 is a cross-sectional view of the fuel tank 23 and its surroundings. As illustrated in FIGS. 4 and 5, the fuel tank 23 includes a tank body 32 and a fuel filler port 33. The tank body 32 has a space for storing fuel inside. The fuel filler port 33 is arranged on an upper surface of the tank body 32. The fuel filler port 33 is open upward. The fuel cap unit 31 is arranged above the fuel filler port 33. The fuel cap unit 31 opens and closes the fuel filler port 33.

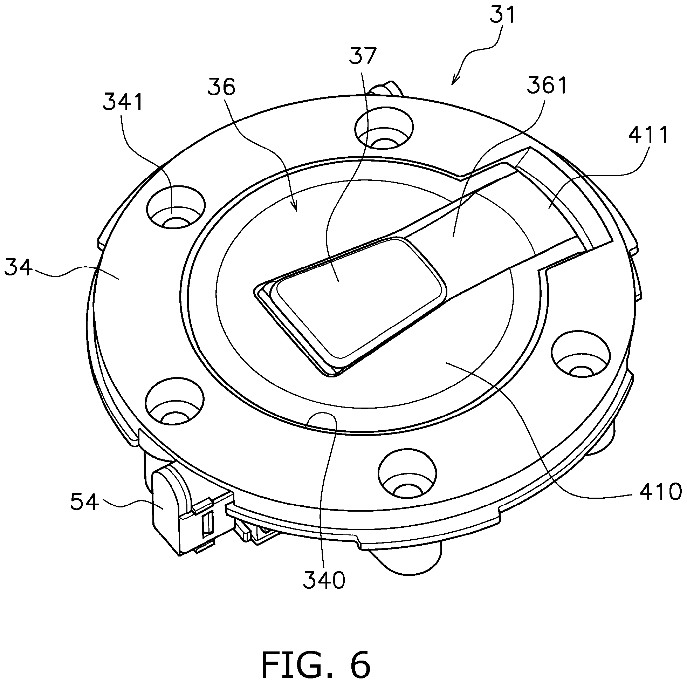

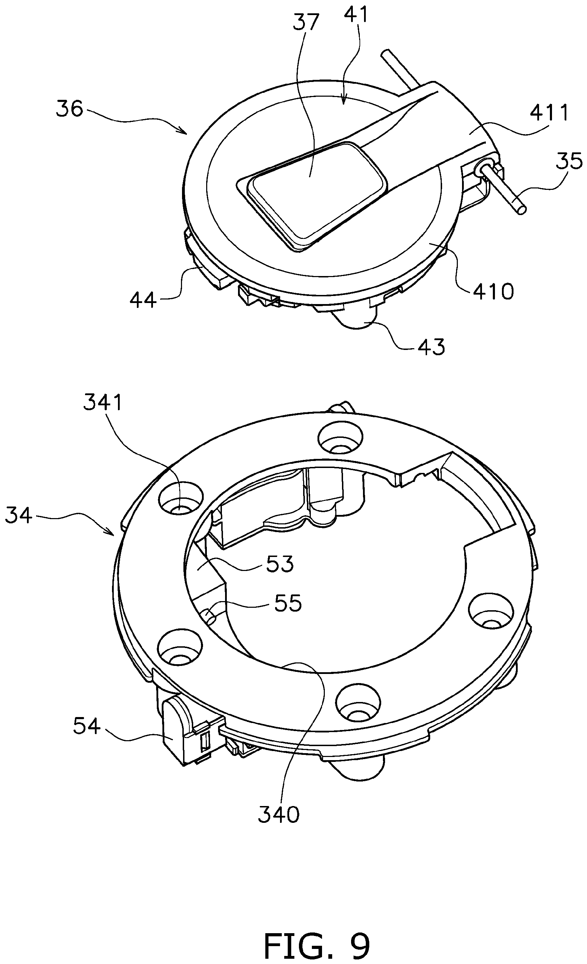

FIGS. 6 to 8 are perspective views of the fuel cap unit 31. FIG. 9 is an exploded view of the fuel cap unit 31. As illustrated in FIGS. 6 to 8, the fuel cap unit 31 includes a support 34, a hinge 35, a cap 36, an operating member 37, and a packing 38. The support 34 is attached to the fuel tank 23. The support 34 has an annular shape. The support 34 has a circular outer shape. The support 34 is arranged above the fuel tank 23. The support 34 has a circular opening 340 facing the fuel filler port 33. The support 34 is arranged around the fuel filler port 33.

The support 34 includes a plurality of holes 341. The plurality of holes 341 are arranged at intervals from each other in a circumferential direction of the support 34. In the drawings, only one of the plurality of holes 341 is designated by a reference numeral, and the other reference numerals are omitted. As illustrated in FIGS. 3 and 4, the support 34 is fixed to the fuel tank 23 by a fixing member 342 such as a bolt passed through the hole 341. As illustrated in FIG. 2, the tank cover 26 includes an opening 260. The support 34, the cap 36, and the operating member 37 are arranged in the opening 260 of the tank cover 26 and are exposed to the outside of the tank cover 26.

The hinge 35 is connected to the support 34 and the cap 36. The hinge 35 has a pin-like shape and extends in a vehicle width direction. The hinge 35 is arranged in front of the operating member 37. The hinge 35 rotatably supports the cap 36. The cap 36 is movably attached to the support 34 via the hinge 35 to an open position and a closed position. As illustrated in FIG. 3, the cap 36 closes the fuel filler port 33 at the closed position. As illustrated in FIG. 4, the cap 36 opens the fuel filler port 33 at the open position.

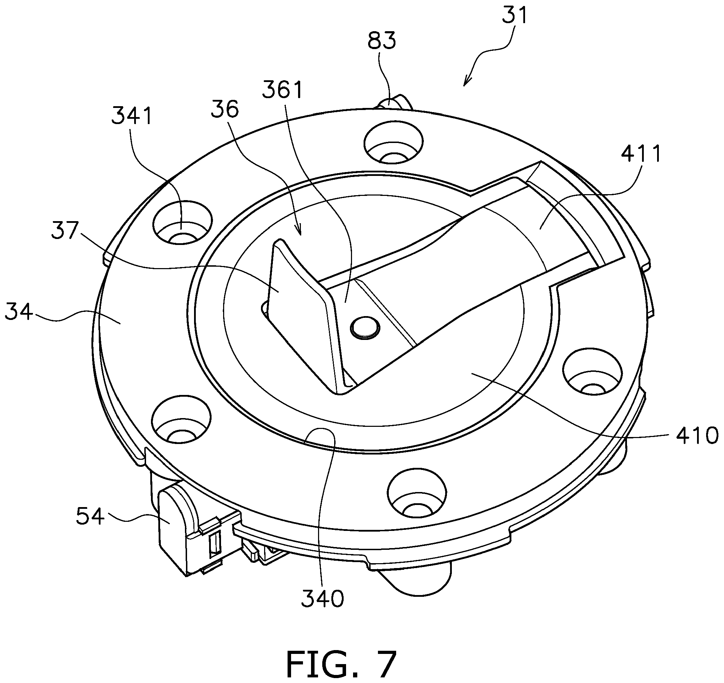

The operating member 37 is attached to the cap 36. The operating member 37 is operable by a rider. The operating member 37 is rotatably supported by the cap 36. A recess 361 is provided on an upper surface of the cap 36. The operating member 37 is arranged in the recess 361. The operating member 37 is movable to a storage position illustrated in FIG. 6 and a deployment position illustrated in FIG. 7. The packing 38 is attached to a bottom surface of the cap 36. The packing 38 is made of elastic material such as rubber.

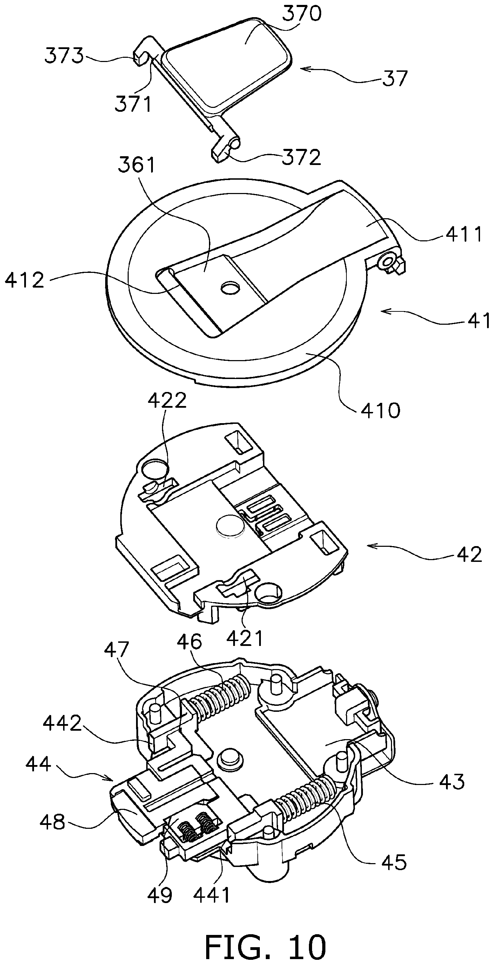

FIG. 10 is an exploded view of the cap 36 and the operating member 37. As illustrated in FIG. 10, the operating member 37 includes an operating portion 370, a rotation shaft 371, a first pressing portion 372, and a second pressing portion 373. The operating portion 370 has a tab-like shape. The operating portion 370 extends rearward from the rotation shaft 371. The operating portion 370 is operable by a rider. The operating portion 370 is arranged in the recess 361. The rotation shaft 371 projects laterally from the operating portion 370. The operating member 37 is rotatably supported by the cap 36 around the rotation shaft 371. The first pressing portion 372 projects downward from one end of the rotation shaft 371. The second pressing portion 373 projects downward from the other end of the rotation shaft 371. The first pressing portion 372 and the second pressing portion 373 rotate together with the rotation shaft 371.

The cap 36 includes an upper cover 41, an inner cover 42, and a cap base 43. The upper cover 41 and the inner cover 42 are attached to the cap base 43. The upper cover 41 includes the recess 361 described above. The upper cover 41 includes a cover body 410 and a connection portion 411. The cover body 410 has a circular shape that matches the opening 340 of the support 34. The cover body 410 includes a slit 412. The rotation shaft 371 of the operating member 37, the first pressing portion 372, and the second pressing portion 373 are arranged in the cap 36 through the slit 412. The connection portion 411 protrudes from the cover body 410. The connection portion 411 extends rearward from the cover body 410. The hinge 35 is connected to the connection portion 411.

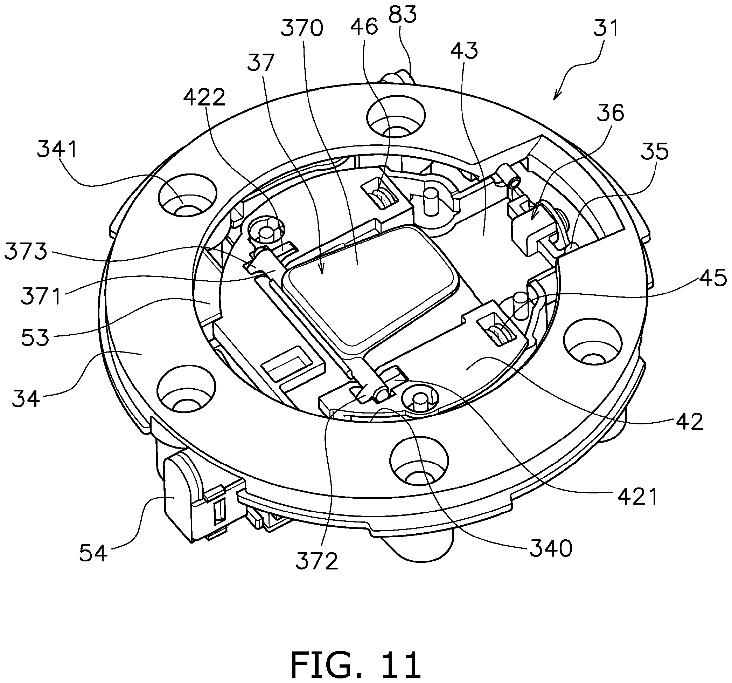

The inner cover 42 is arranged between the upper cover 41 and the cap base 43. The rotation shaft 371 of the operating member 37 is supported by the cap 36 by being sandwiched between the inner cover 42 and the upper cover 41. The inner cover 42 includes a first hole 421 and a second hole 422. FIG. 11 is a perspective view of the fuel cap unit 31 in which the upper cover 41 is omitted. As illustrated in FIG. 11, the first pressing portion 372 extends into the cap base 43 through the first hole 421. The second pressing portion 373 extends into the cap base 43 through the second hole 422.

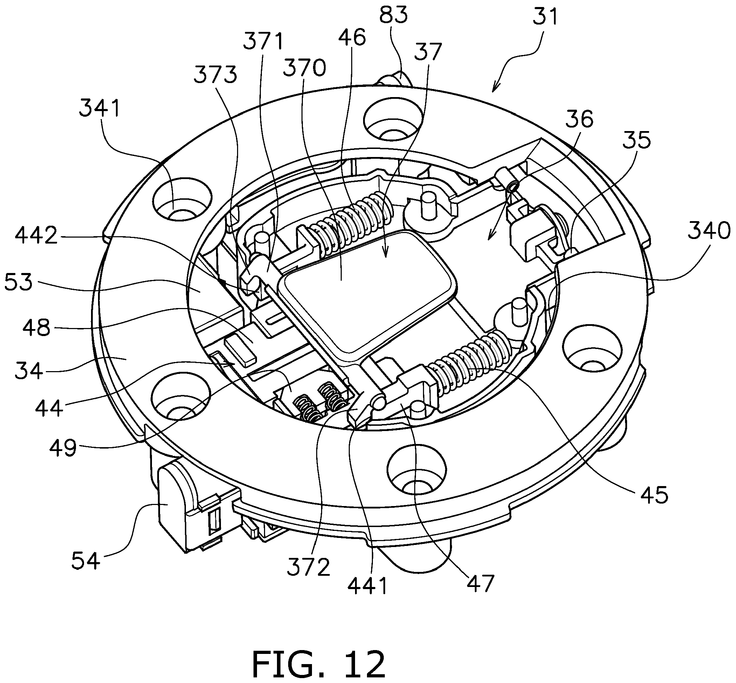

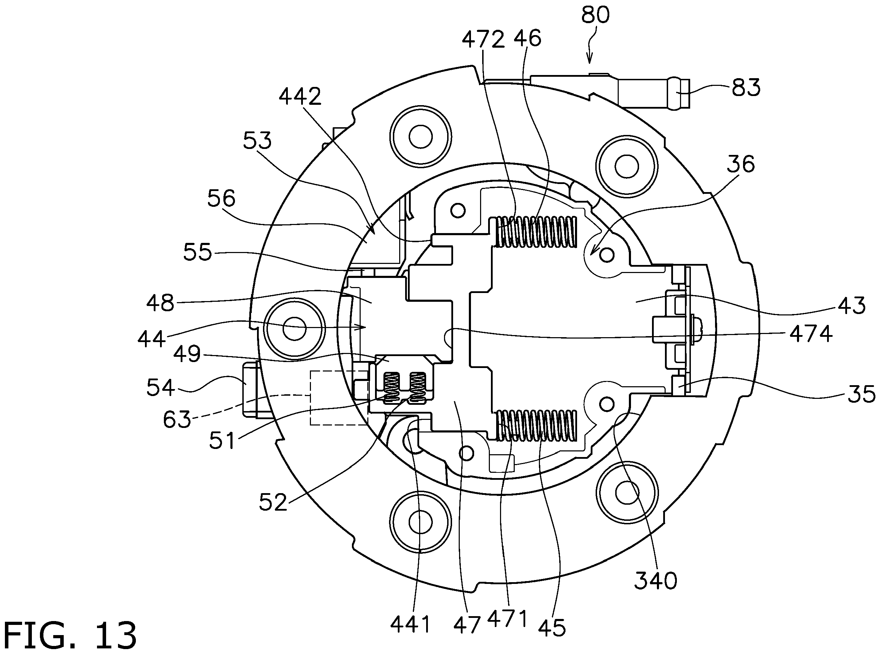

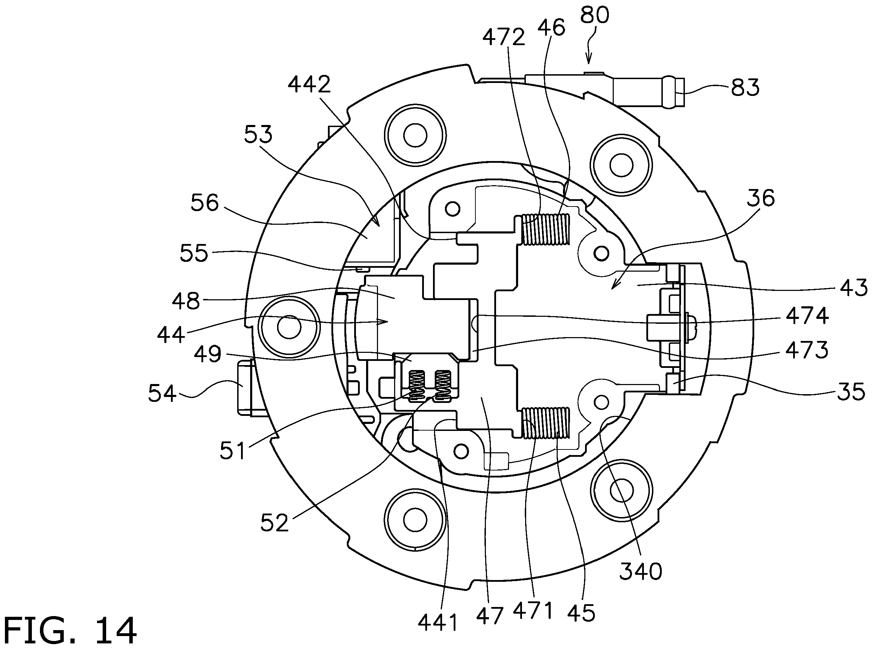

FIG. 12 is a perspective view of the fuel cap unit 31 in which the upper cover 41 and the inner cover 42 are omitted. FIG. 13 is a top view of the fuel cap unit 31 in which the upper cover 41 and the inner cover 42 are omitted. As illustrated in FIGS. 12 and 13, the fuel cap unit 31 includes a slider 44 and elastic members 45 and 46. The slider 44 is attached to the cap base 43. The slider 44 is slidable with respect to the cap base 43. The slider 44 is movable to an engaged position illustrated in FIG. 13 and a disengaged position illustrated in FIG. 14. Hereinafter, a moving direction of the slider 44 is referred to as a sliding direction.

As seen from an axial direction of the fuel filler port 33, the slider 44 overlaps with the support 34 at the engaged position. The slider 44 engages to the support 34 at the engaged position. As seen from the axial direction of the fuel filler port 33, the slider 44 does not overlap with the support 34 at the disengaged position. The slider 44 does not engage to the support 34 at the disengaged position. In the following description, a top view means to be viewed from the axial direction of the fuel filler port 33.

The elastic members 45 and 46 are attached to the cap base 43. The elastic members 45 and 46 are supported by the cap base 43 and the inner cover 42. The elastic members 45 and 46 urge the slider 44 toward the engaged position. The elastic members 45 and 46 include a first elastic member 45 and a second elastic member 46. The first elastic member 45 and the second elastic member 46 are arranged apart from each other in the left-right direction. The first elastic member 45 and the second elastic member 46 are, for example, springs. The first elastic member 45 and the second elastic member 46 urge the slider 44 toward the engaged position.

When the operating member 37 is in the storage position, the slider 44 is held at the engaged position by the urging force of the elastic members 45 and 46. The slider 44 moves from the engaged position to the disengaged position by being pressed by the operating member 37. The slider 44 includes a first receiving portion 441 and a second receiving portion 442. The first receiving portion 441 and the second receiving portion 442 are arranged apart from each other in the left-right direction. As illustrated in FIG. 12, the first receiving portion 441 faces the first pressing portion 372. The second receiving portion 442 faces the second pressing portion 373. As the first pressing portion 372 rotates around the rotation shaft 371, the first pressing portion 372 presses the first receiving portion 441. As the second pressing portion 373 rotates around the rotation shaft 371, the second pressing portion 373 presses the first receiving portion 441. Therefore, the first receiving portion 441 is pressed by the first pressing portion 372 as the operating member 37 moves from the storage position to the deployment position. The second receiving portion 442 is pressed by the second pressing portion 373 as the operating member 37 moves from the storage position to the deployment position. As a result, the slider 44 moves from the engaged position to the disengaged position.

When the cap 36 is in the closed position and the slider 44 is in the engaged position, as illustrated in FIG. 13, the entire slider 44 is located within an outer shape of the support 34 as seen in the top view of the fuel cap unit 31. When the cap 36 is in the closed position and the slider 44 is in the disengaged position, as illustrated in FIG. 14, the entire slider 44 is located in the opening 340 of the support 34 as seen in the top view.

The slider 44 includes a first slider 47, a second slider 48, a clutch member 49, and elastic members 51 and 52. The first slider 47 is pressed by the operating member 37. The first slider 47 includes the first receiving portion 441 and the second receiving portion 442 described above. The first slider 47 is pressed by the operating member 37 at the first receiving portion 441 and the second receiving portion 442. The first slider 47 includes a third receiving portion 471 and a fourth receiving portion 472. The third receiving portion 471 is in contact with the first elastic member 45. The fourth receiving portion 472 is in contact with the second elastic member 46. The first slider 47 is pressed by the elastic members 45 and 46 at the third receiving portion 471 and the fourth receiving portion 472.

The second slider 48 is provided separately from the first slider 47. The second slider 48 is slidable with respect to the first slider 47. The second slider 48 engages to the support 34 when the slider 44 is located at the engaged position. The second slider 48 does not engage to the support 34 when the slider 44 is located at the disengaged position. As illustrated in FIG. 14, the first slider 47 includes a recess 473. A part of the second slider 48 is arranged in the recess 473 of the first slider 47. The first slider 47 includes a contact surface 474. As illustrated in FIG. 13, when the slider 44 is at the engaged position, the second slider 48 is in contact with the contact surface 474 of the first slider 47. When the slider 44 is at the engaged position, the second slider 48 is pressed by the contact surface 474 of the first slider 47.

The clutch member 49 connects the first slider 47 and the second slider 48. The clutch member 49 is fixed to the first slider 47 in the sliding direction. That is, the clutch member 49 is immovable in the sliding direction with respect to the first slider 47. The clutch member 49 is movable with respect to the first slider 47 in a direction intersecting the sliding direction. The elastic members 51 and 52 are, for example, springs. The clutch member 49 is pressed by the elastic members 51 and 52 toward the second slider 48 in the direction intersecting the sliding direction.

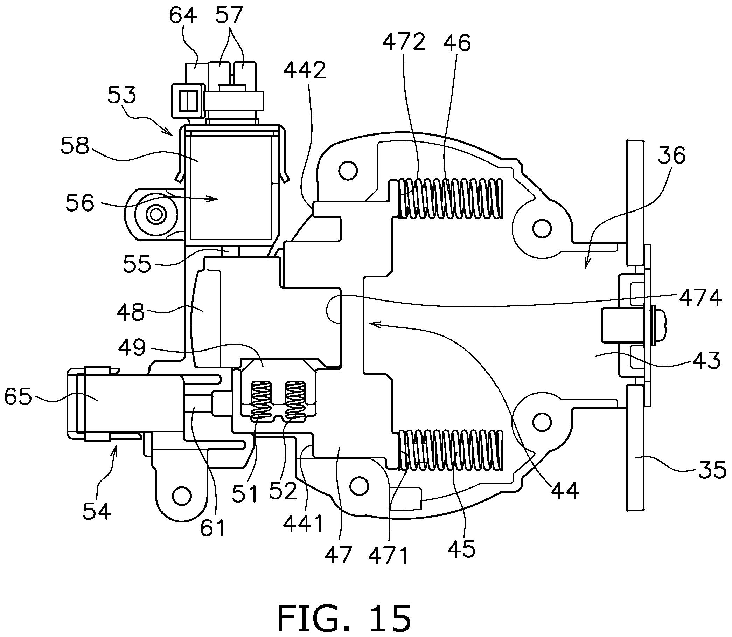

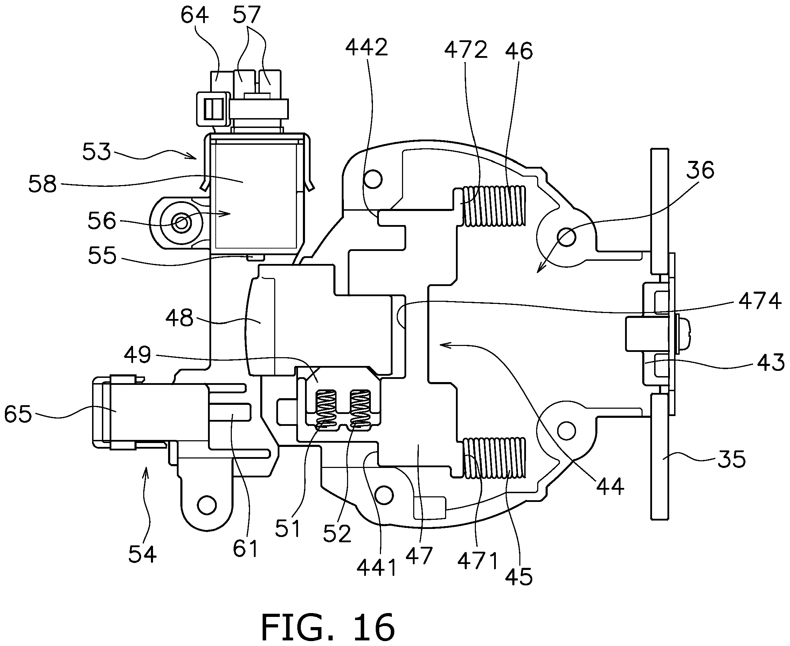

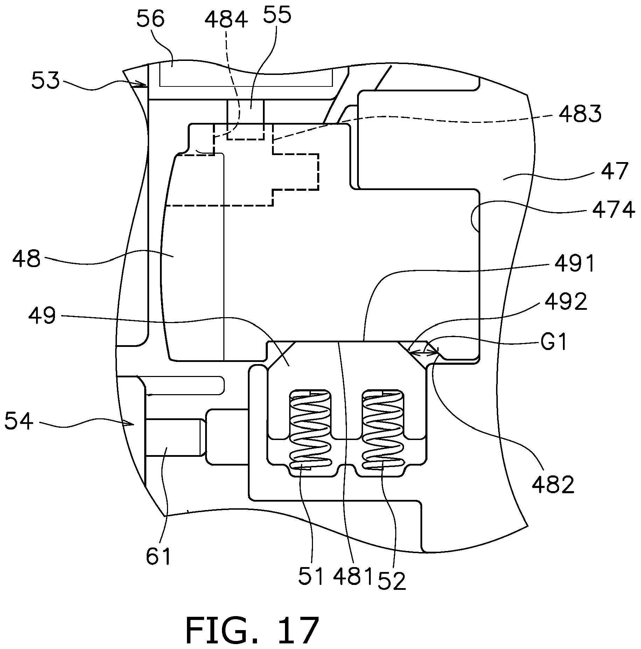

FIGS. 15 and 16 are top views showing a part of the fuel cap unit 31. FIG. 17 is an enlarged view of FIG. 15. In FIGS. 15 and 17, the slider 44 is located at the engaged position. In FIG. 16, the slider 44 is located at the disengaged position. As illustrated in FIG. 17, the clutch member 49 includes a first slide surface 491 and a first tapered surface 492. The first slide surface 491 extends in the sliding direction. The first slide surface 491 is in contact with the second slider 48. The first tapered surface 492 is arranged in a direction toward the disengaged position with respect to the first slide surface 491.

A side surface of the second slider 48 includes a second slide surface 481 and a second tapered surface 482. The second slide surface 481 extends in the sliding direction. The second slide surface 481 is in contact with the first slide surface 491. The second tapered surface 482 is arranged in a direction toward the disengaged position with respect to the second slide surface 481. The second tapered surface 482 faces the first tapered surface 492 in the sliding direction.

When the slider 44 is located at the engaged position, the first tapered surface 492 is arranged at a gap G1 from the second tapered surface 482. As the first slider 47 moves from the engaged position to the disengaged position, the first tapered surface 492 approaches the second tapered surface 482. When the first tapered surface 492 contacts the second tapered surface 482 and presses the second tapered surface 482, the first slider 47 and the second slider 48 move integrally.

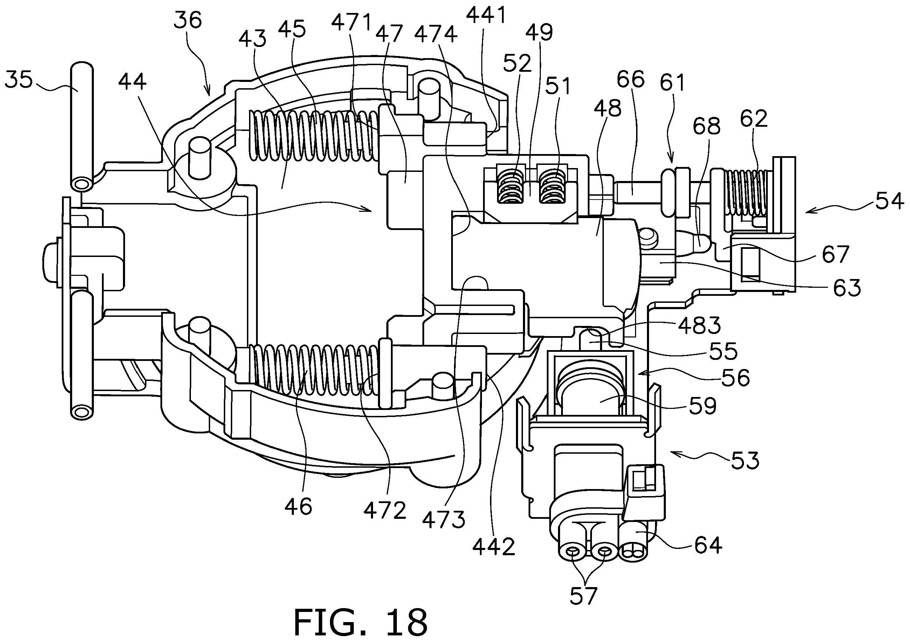

FIG. 18 is a perspective view showing a part of the fuel cap unit 31. As illustrated in FIGS. 15 to 18, the fuel cap unit 31 includes a solenoid 53 and a sensor 54. The solenoid 53 is arranged on the lateral side of the second slider 48. The solenoid 53 is fixed to the support 34. The solenoid 53 includes a lock member 55, a solenoid body 56, and an electric wire 57. The electric wire 57 is connected to the solenoid body 56. The lock member 55 projects from the solenoid body 56. The lock member 55 is movable to a lock position and a release position.

In FIGS. 15 and 17, the lock member 55 is located at the lock position. In FIG. 16, the lock member 55 is located at the release position. The lock member 55 moves from the release position to the lock position by moving from the solenoid body 56 toward the second slider 48. The solenoid body 56 includes a solenoid case 58 and a coil 59. In FIG. 18, the solenoid case 58 is omitted. The coil 59 is arranged in the solenoid case 58. The solenoid 53 moves the lock member 55 by the magnetic force generated by energizing the coil 59.

As illustrated in FIGS. 17 and 18, the second slider 48 includes a notch 483. The notch 483 is provided on the lateral side surface of the second slider 48 facing the solenoid 53. The notch 483 extends in the sliding direction. As illustrated in FIG. 17, as seen in the top view, the lock member 55 overlaps with the second slider 48 at the lock position. The lock member 55 is located in the notch 483 at the lock position. The lock member 55 locks the movement of the slider 44 toward the disengaged position by engaging the second slider 48 at the lock position. The lock member 55 moves from the lock position to the release position by retracting from the second slider 48 toward the solenoid body. As illustrated in FIG. 16, as seen in the top view, the lock member 55 does not overlap the second slider 48 at the release position. The lock member 55 is located outside the notch 483 at the release position. At the release position, the lock member 55 unlocks the slider 44 by not engaging the second slider 48.

As illustrated in FIG. 13, the entire solenoid body 56 is located within the outer shape of the support 34 as seen in the top view. As seen in the top view, the solenoid body 56 overlaps with the support 34. As seen in the top view, a part of the solenoid body 56 is located in the opening 340 of the support 34. Therefore, as seen in the top view, the solenoid 53 overlaps with the cap 36 when the cap 36 is in the closed position.

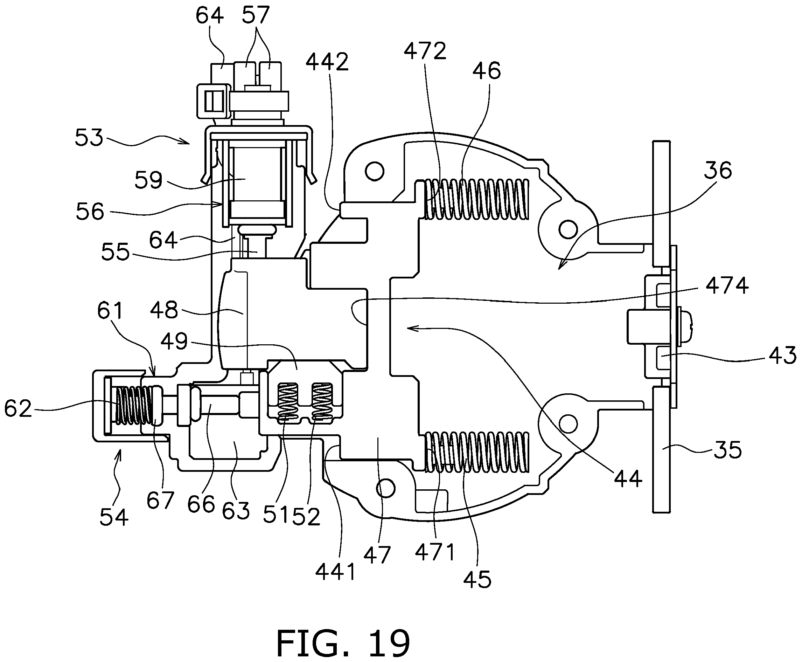

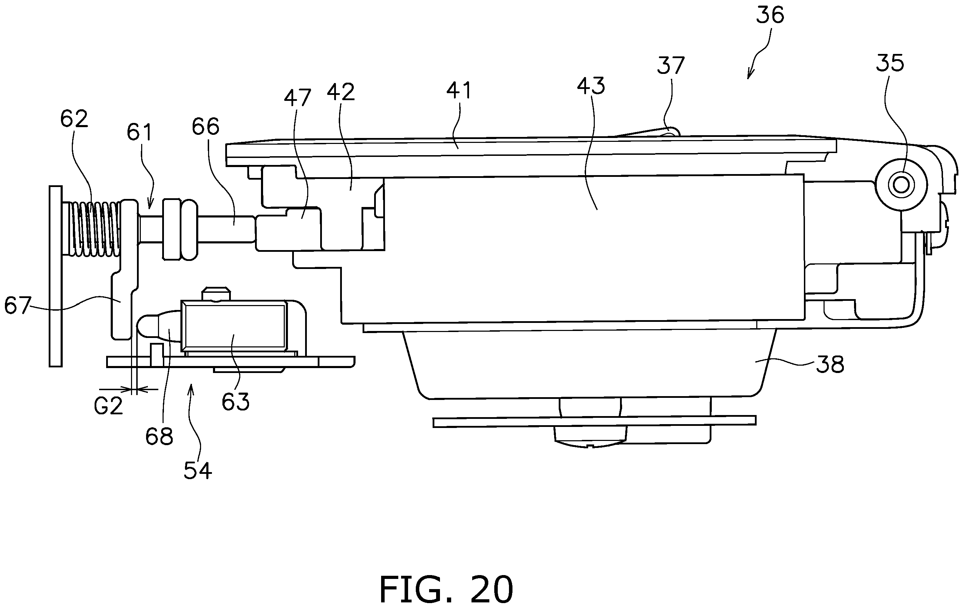

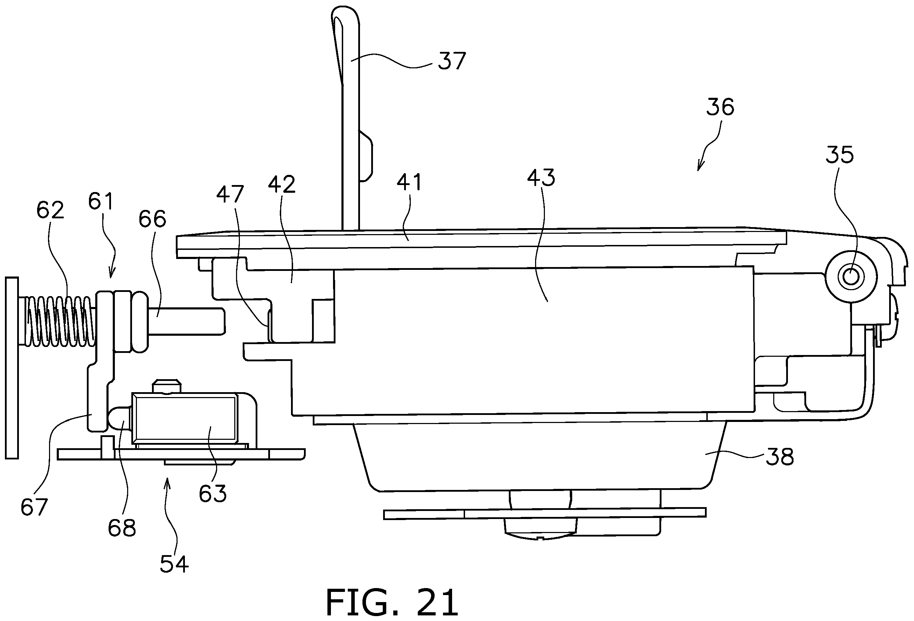

The sensor 54 detects the movement of the slider 44 from the engaged position to the disengaged position. The sensor 54 is fixed to the support 34. FIG. 19 is a top view showing a part of the fuel cap unit 31. FIGS. 20 and 21 are side views showing a part of the fuel cap unit 31. As illustrated in FIGS. 19 to 21, the sensor 54 includes a movable body 61, an urging member 62, a switch 63, an electric cable 64, and a sensor case 65 illustrated in FIG.15. Note that the sensor case 65 is omitted in FIGS. 19 to 21. The movable body 61, the urging member 62, and the switch 63 are arranged in the sensor case 65. The sensor case 65 is integrated with the solenoid case 58.

The movable body 61 faces the slider 44 in the sliding direction. The urging member 62 urges the movable body 61 toward the slider 44. The urging member 62 is, for example, a spring. The movable body 61 is movable in the sliding direction. The movable body 61 moves according to the movement of the first slider 47. As illustrated in FIGS. 15 and 20, when the slider 44 is located at the engaged position, the movable body 61 is in contact with the first slider 47. As illustrated in FIGS. 16 and 21, when the slider 44 is located at the engaged position, the movable body 61 is separated from the first slider 47.

As illustrated in FIGS. 20 and 21, the movable body 61 includes a shaft portion 66 and an arm portion 67. The shaft portion 66 extends in the sliding direction. A tip of the shaft portion 66 faces the first slider 47. The arm portion 67 extends downward from the shaft portion 66. The arm portion 67 faces the switch 63 in the sliding direction.

The electric cable 64 is connected to the switch 63. The switch 63 is operated by the movable body 61. The switch 63 is arranged below the movable body 61. As illustrated in FIG. 19, the movable body 61 overlaps with the switch 63 as seen in the top view. Specifically, the switch 63 is located below the shaft portion 66. As seen in the top view, the switch 63 overlaps with the shaft portion 66. The switch 63 is located below the first slider 47 at the engaged position. As seen in the top view, the switch 63 overlaps with the first slider 47 at the engaged position.

As illustrated in FIG. 13, the sensor 54 overlaps with the support 34 as seen in the top view. As seen in the top view, a part of the sensor 54 is located within the opening 340 of the support 34. Therefore, as seen in the top view, a part of the sensor 54 overlaps with the cap 36. As seen in the top view, the entire switch 63 is located within the outer shape of the support 34. As seen in the top view, a part of the switch 63 is located within the opening 340 of the support 34. The switch 63 includes a contact piece 68. The contact piece 68 faces the arm portion 67.

As illustrated in FIG. 20, when the slider 44 is in the engaged position, the movable body 61 is pressed by the first slider 47. Therefore, the arm portion 67 of the movable body 61 is separated from the contact piece 68 of the switch 63. A gap G2 between the arm portion 67 and the switch 63 when the slider 44 is located at the engaged position is smaller than the gap G1 between the first tapered surface 492 and the second tapered surface 482 in the sliding direction.

As illustrated in FIG. 21, when the slider 44 is located at the disengaged position, the movable body 61 is separated from the first slider 47. Therefore, as illustrated in FIG. 21, the arm portion 67 of the movable body 61 presses the contact piece 68 of the switch 63 by the urging force of the urging member 62. The sensor 54 detects the position of the slider 44 depending on whether or not the contact piece 68 of the switch 63 is pressed.

As illustrated in FIG. 17, the second slider 48 includes a receiving portion 484. The receiving portion 484 faces the lock member 55 located at the lock position in the sliding direction. When the second slider 48 moves toward the disengaged position, the receiving portion 484 approaches the lock member 55. Then, when the receiving portion 484 contacts the lock member 55, the movement of the second slider 48 toward the disengaged position is restricted.

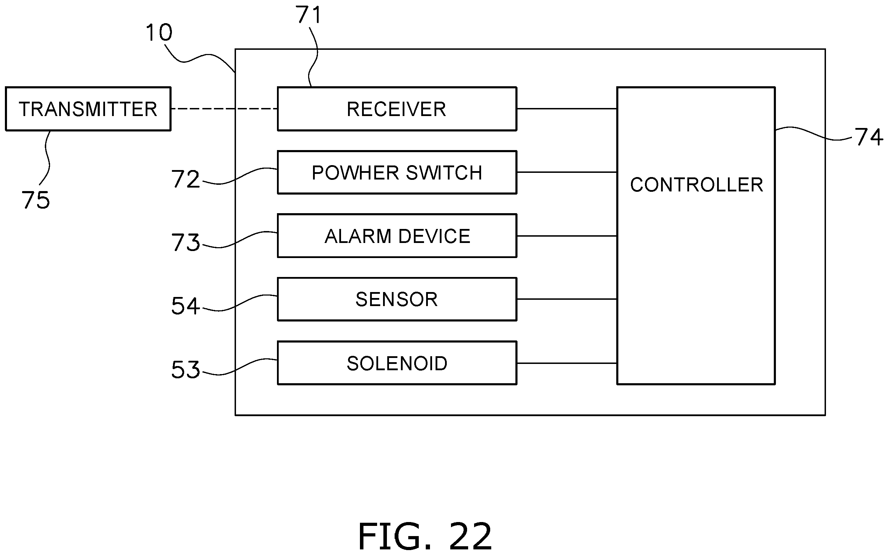

FIG. 22 is a block diagram showing a control system 10 of the straddled vehicle 1. The control system 10 is mounted on the straddled vehicle 1. As illustrated in FIG. 22, the straddled vehicle 1 includes a receiver 71, a power switch 72, an alarm device 73, and a controller 74. The receiver 71, the power switch 72, the alarm device 73, and the controller 74 may be arranged at any location of the straddled vehicle 1, and the locations are not particularly limited. The receiver 71 wirelessly communicates with a transmitter 75 carried by a rider. The receiver 71 receives a signal indicative of an identification code unique to the transmitter 75 from the transmitter 75.

The power switch 72 switches the power of the straddled vehicle 1 on and off. The power switch 72 is operated by a rider. For example, the meter panel 18 may be activated by turning on the power switch 72. The alarm device 73 issues an alarm. The alarm device 73 may be, for example, a buzzer and may emit a warning sound. Alternatively, the alarm device 73 is a lamp, and the warning light may be turned on. Alternatively, the alarm device 73 may be a liquid crystal panel and display a warning image.

The controller 74 includes, for example, a microcomputer and electrically controls the straddled vehicle 1. The controller 74 may be composed of a plurality of controllers. Alternatively, the controller 74 may be composed of a single controller. The controller 74 authenticates the identification code of the transmitter 75 based on the signal received by the receiver 71. When the identification code of the transmitter 75 is appropriate, the controller 74 authenticates the identification code of the transmitter 75. The controller 74 detects the movement of the slider 44 by the signal from the sensor 54. The controller 74 controls the solenoid 53 to switch between locking and unlocking the slider 44.

As illustrated in FIG. 6, when the cap 36 is at the closed position and the operating member 37 is at the storage position, the operating member 37 is not pressing the slider 44. As a result, the slider 44 is located at the engaged position, as illustrated in FIG. 13. As illustrated in FIG. 20, when the slider 44 is at the engaged position, the movable body 61 of the sensor 54 is away from the switch 63. The controller 74 holds the lock member 55 at the lock position when the movable body 61 is away from the switch 63.

As illustrated in FIG. 7, when the cap 36 is at the closed position and a rider moves the operating member 37 from the storage position to the deployment position, the slider 44 is pressed by the operating member 37. As a result, the slider 44 moves from the engaged position to the disengaged position. At this time, the movable body 61 contacts the switch 63 before the receiving portion 484 contacts the lock member 55. When the controller 74 detects that the movable body 61 contacts the switch 63 from the signal of the sensor 54 and authenticates the identification code of the transmitter 75, the controller 74 moves the lock member 55 from the lock position to the release position.

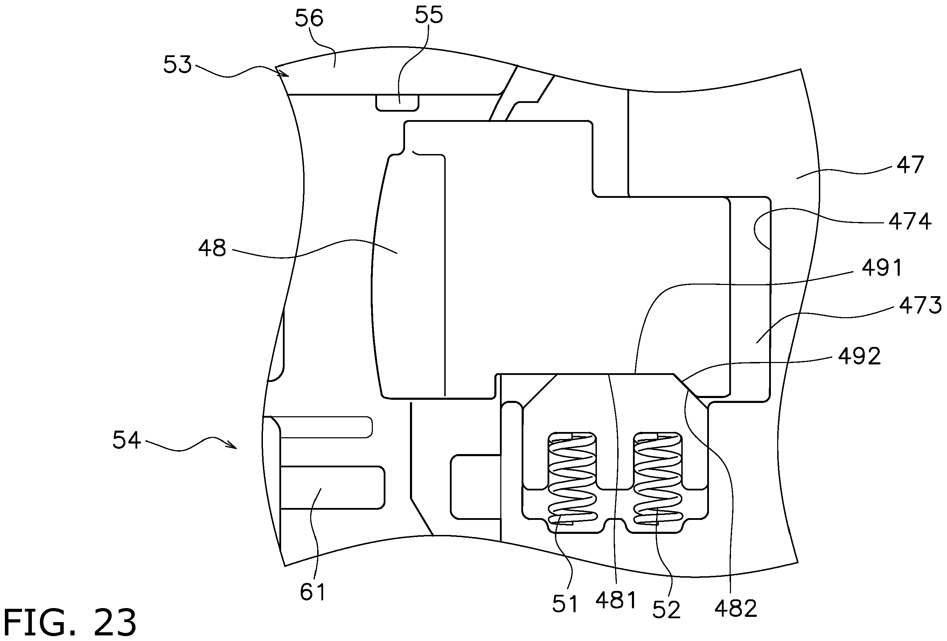

Specifically, when a rider moves the operating member 37 toward the deployment position, the first slider 47 is pressed by the operating member 37 and starts moving toward the disengaged position. The clutch member 49 moves together with the first slider 47, and the first slide surface 491 of the clutch member 49 slides along the second slide surface 481 of the second slider 48. Then, as illustrated in FIG. 23, the first tapered surface 492 of the clutch member 49 is engaged to the second tapered surface 482 of the second slider 48. As a result, the first slider 47 and the second slider 48 are connected to each other via the clutch member 49, and the second slider 48 moves together with the first slider 47 toward the disengaged position.

As described above, when the slider 44 is located at the engaged position, the gap G2 between the arm portion 67 and the switch 63 is smaller in the sliding direction than the gap G1 between the first tapered surface 492 and the second tapered surface 482. Therefore, the arm portion 67 contacts the switch 63 before the first tapered surface 492 is locked to the second tapered surface 482. Therefore, before the second slider 48 moves toward the disengaged position together with the first slider 47, the controller 74 controls the solenoid 53 to move the lock member 55 from the lock position to the release position.

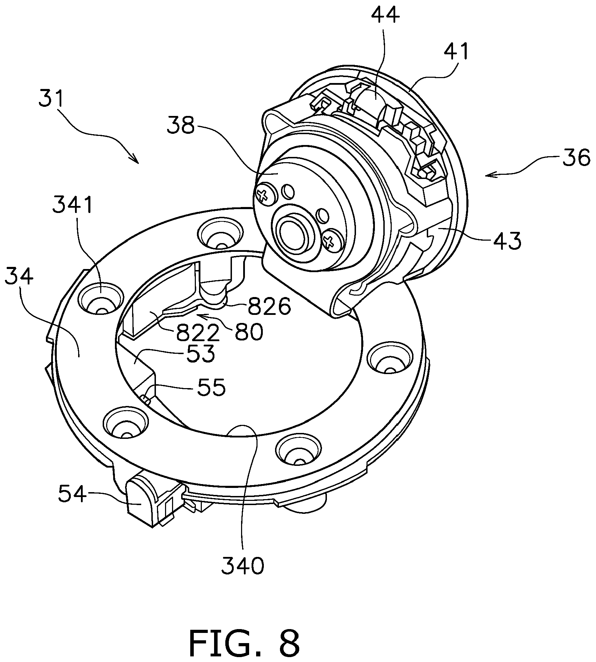

After that, as illustrated in FIG. 7, when a rider moves the operating member 37 to the deployment position, the slider 44 moves to the disengaged position as illustrated in FIG. 14. As a result, a rider can move the cap 36 from the closed position to the open position, as illustrated in FIG. 8.

When the controller 74 detects that the movable body 61 contacts the switch 63 from the signal of the sensor 54 but does not authenticate the identification code of the transmitter 75, the controller 74 holds the lock member 55 at the lock position. Therefore, the lock member 55 is held at the lock position even if another person who does not have the proper transmitter 75 moves the operating member 37 toward the deployment position. Therefore, the slider 44 cannot be moved to the disengaged position, and the cap 36 cannot be moved from the closed position to the open position.

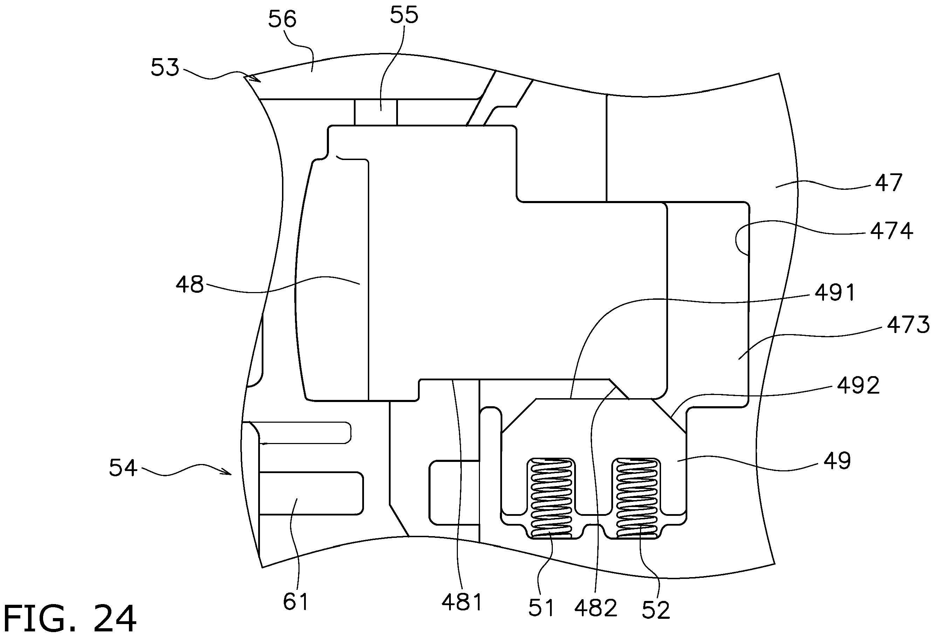

However, even if the lock member 55 is still held at the lock position, the operating member 37 is movable to the deployment position. In that case, the clutch member 49 moves toward the disengaged position together with the first slider 47, but the second slider 48 is held at the engaged position by being engaged by the lock member 55. Therefore, the clutch member 49 is pressed by the second tapered surface 482 of the second slider 48 in the direction away from the second slider 48. As a result, as illustrated in FIG. 24, the clutch member 49 goes over the second tapered surface 482 and further moves without being engaged to the second tapered surface 482. In this way, even if the operating member 37 is moved to the deployment position, the first slider 47 and the clutch member 49 move according to the operation of the operating member 37, but the movement of the second slider 48 is locked by the lock member 55. Therefore, even if the operating member 37 is operated when the identification code of the transmitter 75 is not authenticated, the operating member 37 is prevented from being damaged while maintaining the lock by the lock member 55.

The controller 74 determines whether the cap 36 is located at the closed position or the open position based on the signal from the sensor 54. When the power switch 72 is turned on while the cap 36 is located at the open position, the controller 74 issues the alarm from the alarm device 73.

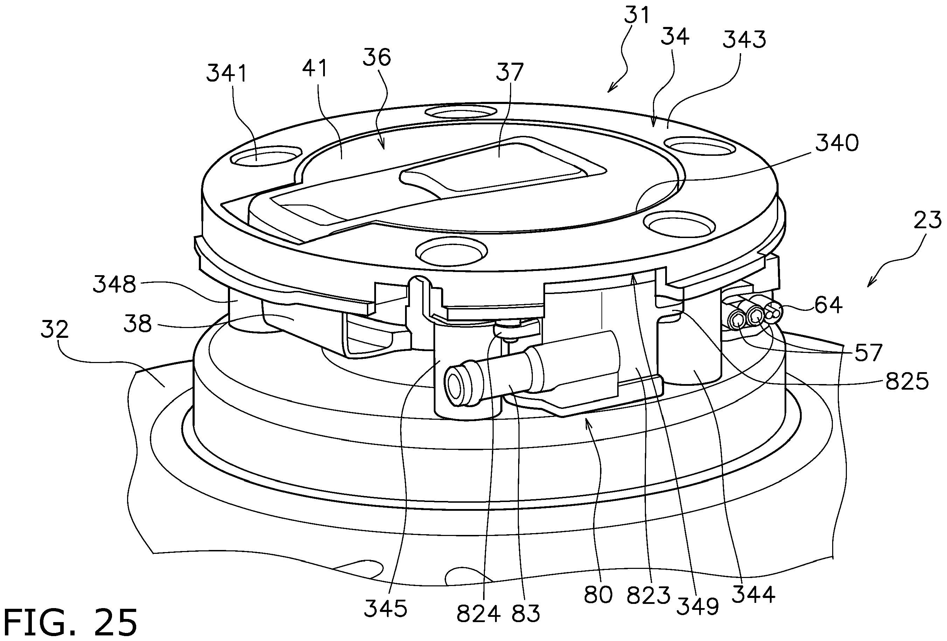

FIG. 25 is a perspective view of a part of the fuel tank 23 and the fuel cap unit 31. As illustrated in FIGS. 13 and 25, the fuel cap unit 31 includes a rollover valve 80. The rollover valve 80 is opened when a pressure in the fuel tank 23 exceeds a predetermined value. The rollover valve 80 is closed when the pressure in the fuel tank 23 is less than the predetermined value. The rollover valve 80 prevents an outflow of fuel in the fuel tank 23 when the vehicle falls.

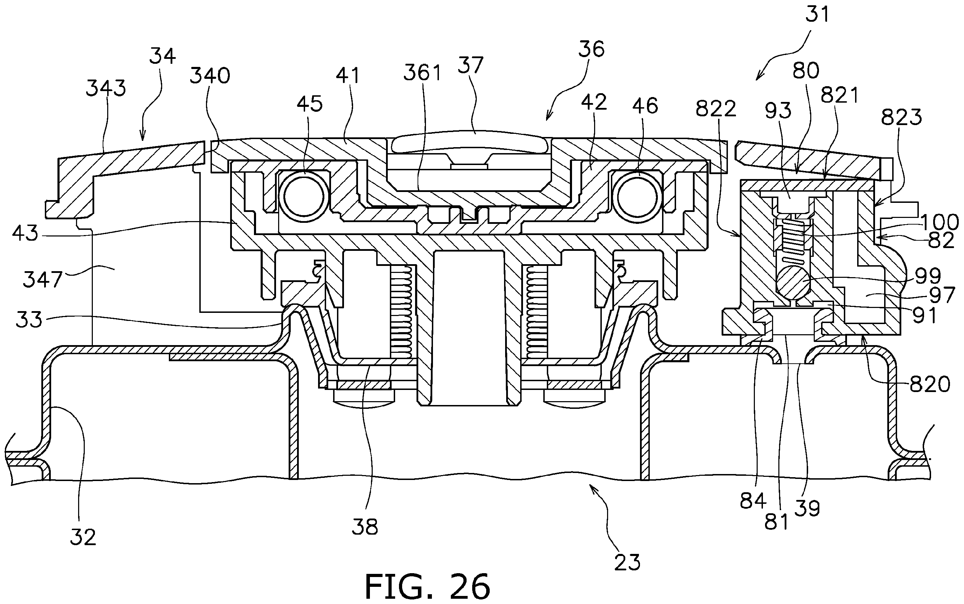

FIG. 26 is a cross-sectional view of a part of the fuel tank 23 and the fuel cap unit 31. As illustrated in FIG. 26, the fuel tank 23 includes a tank intake port 39. The tank intake port 39 is provided on the upper surface of the fuel tank 23. The tank intake port 39 communicates with the space inside the fuel tank 23. The tank intake port 39 is arranged on the lateral side of the fuel filler port 33. The rollover valve 80 is arranged above the tank intake port 39.

The rollover valve 80 is arranged above the tank intake port 39. As seen in the top view, the rollover valve 80 overlaps with the tank intake port 39. The rollover valve 80 includes a valve intake port 81. The valve intake port 81 is arranged above the tank intake port 39. The valve intake port 81 is connected to the tank intake port 39. The rollover valve 80 is attached to the support 34. The rollover valve 80 is located below the support 34. As seen in the top view, the rollover valve 80 overlaps with the support 34. The rollover valve 80 is sandwiched between the support 34 and the fuel tank 23.

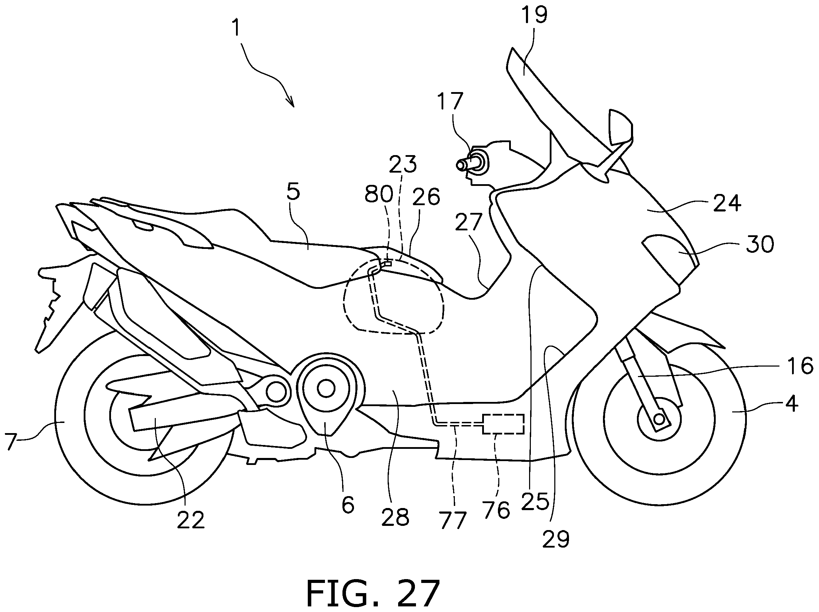

FIG. 27 is a right-side view of the straddled vehicle 1. As illustrated in FIG. 27, the straddled vehicle 1 includes a canister 76 and a charge hose 77. The canister 76 is arranged below the fuel tank 23. The canister 76 is arranged in front of the power unit 6. The canister 76 is arranged below the footrest 29. The canister 76 is arranged forward of the fuel tank 23. The charge hose 77 is connected to the rollover valve 80 and the canister 76. The charge hose 77 is arranged outside the fuel tank 23.

The charge hose 77 projects rearward from the rollover valve 80 and bends downward. The charge hose 77 extends downward through the lateral side of the fuel tank 23. As seen in the vehicle side view, the charge hose 77 overlaps with the fuel tank 23. The charge hose 77 extends below the footrest 29.

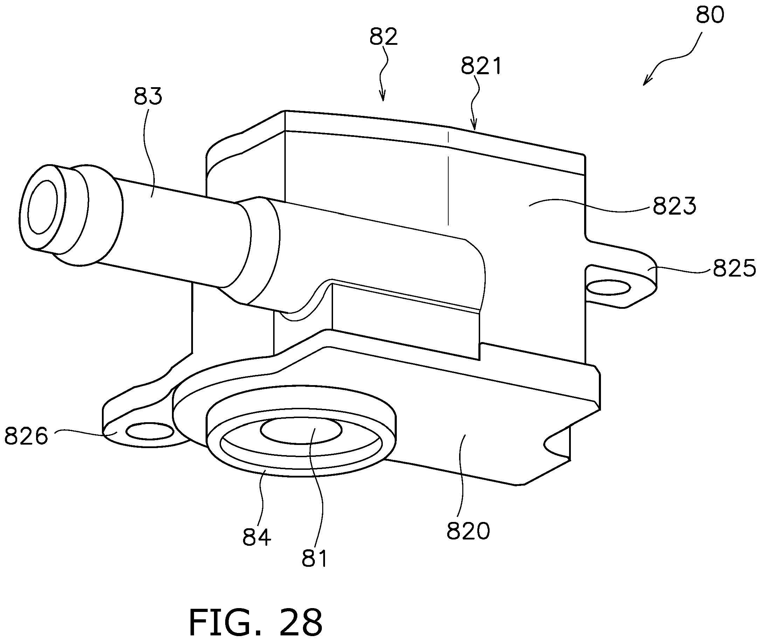

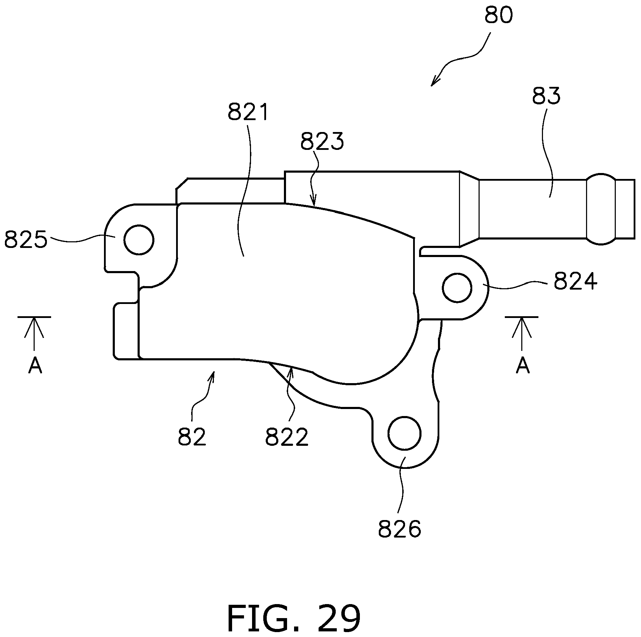

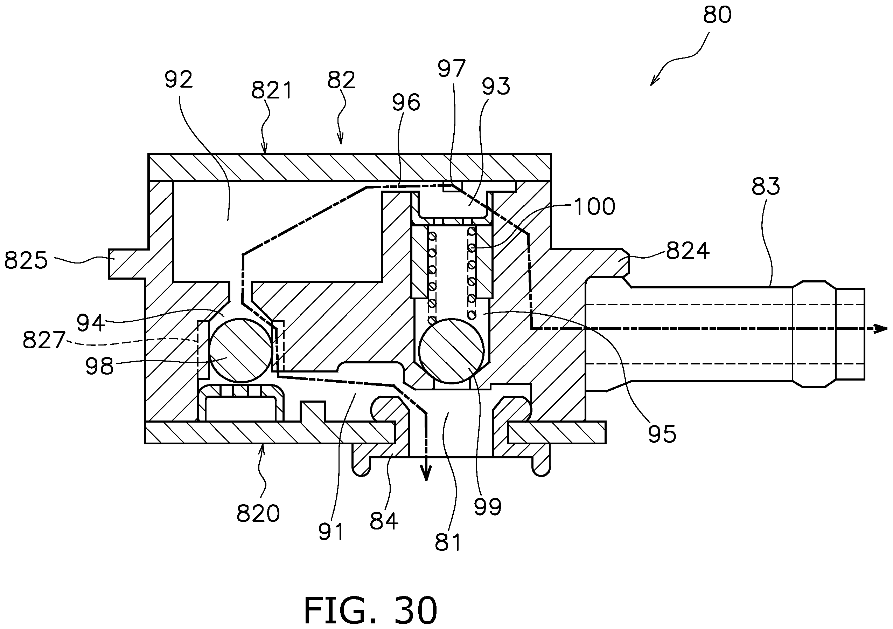

FIG. 28 is a perspective view of the rollover valve 80. FIG. 29 is a top view of the rollover valve 80. FIG. 30 is a cross-sectional view taken along the line A-A of FIG. 29 of the rollover valve 80. As illustrated in FIGS. 28 to 30, the rollover valve 80 includes a valve body 82 and a connecting pipe 83.

The valve body 82 includes a bottom surface 820, an upper surface 821, an inner side surface 822, and an outer side surface 823. The bottom surface 820 has a flat shape. The bottom surface 820 is provided with the valve intake port 81 described above. The bottom surface 820 faces the upper surface 821 of the fuel tank 23. The upper surface 821 has a flat shape. The upper surface 821 faces a lower surface of the support 34.

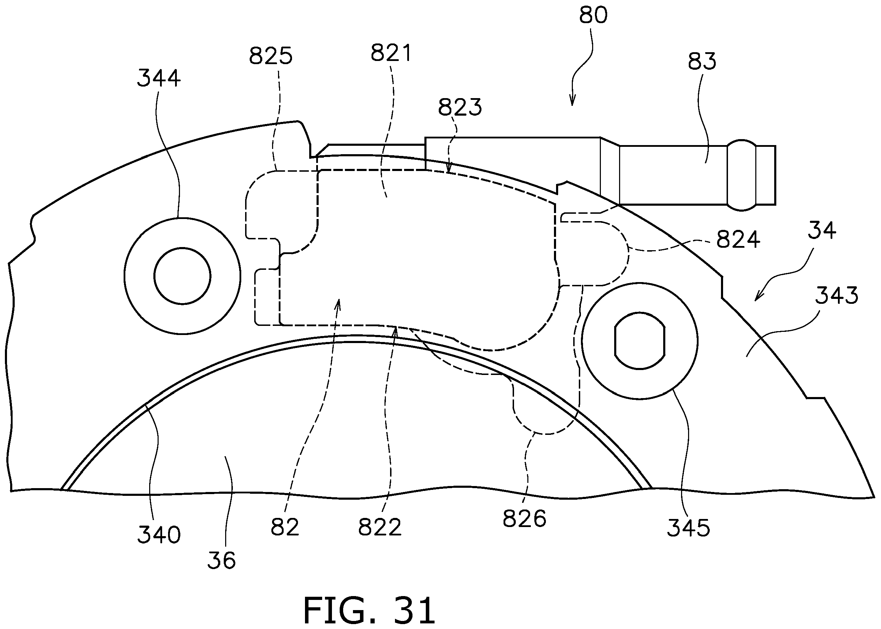

FIG. 31 is a top view of a part of the support 34 and the rollover valve 80. As illustrated in FIG. 31, the valve body 82 overlaps with the support 34 as seen in the top view. The inner side surface 822 has a curved shape along an edge of the opening 340 of the support 34. The inner side surface 822 is located outside the edge of the opening 340 in a radial direction of the support 34. As seen in the top view, the inner side surface 822 overlaps with the support 34. The outer side surface 823 has a shape curved along the outer shape of the support 34. The outer side surface 823 is located inside the outer shape of the support 34 in the radial direction of the support 34. As seen in the top view, the outer side surface 823 overlaps with the support 34.

The connecting pipe 83 projects rearward from the valve body 82. A charge hose 77 is connected to the connecting pipe 83. As seen in the top view, the connecting pipe 83 projects from the support 34. As seen in the top view, a part of the connecting pipe 83 does not overlap with the support 34. As seen in the top view, a part of the connecting pipe 83 is located outside the outer shape of the support 34.

The rollover valve 80 includes a plurality of mounting portions 824 to 826. The rollover valve 80 is fixed to the support 34 at the plurality of mounting portions 824 to 826. The plurality of mounting portions 824 to 826 project from the valve body 82. The plurality of mounting portions 824 to 826 includes a first mounting portion 824, a second mounting portion 825, and a third mounting portion 826. The first mounting portion 824 projects rearward from the valve body 82. The second mounting portion 825 projects forward from the valve body 82. The third mounting portion 826 projects inward from the valve body 82 in the radial direction of the support 34. The third mounting portion 826 is located below the first mounting portion 824 and the second mounting portion 825.

As illustrated in FIG. 30, the valve body 82 includes a first chamber 91, a second chamber 92, a third chamber 93, a first passage 94, a second passage 95, a third passage 96, and a fourth passage 97. The first chamber 91, the second chamber 92, the third chamber 93, the first passage 94, the second passage 95, the third passage 96, and the fourth passage 97 are arranged in the valve body 82. The first chamber 91 communicates with the valve intake port 81. The second chamber 92 and the third chamber 93 are arranged above the first chamber 91.

The second chamber 92 communicates with the first chamber 91 through the first passage 94. A first valve body 98 is arranged in the first passage 94. The first valve body 98 opens and closes the first passage 94 according to the pressure in the first chamber 91. When the pressure in the first chamber 91 is small, the first valve body 98 opens the first passage 94. When the first passage 94 is open, fluid can enter and exit between the first chamber 91 and the second chamber 92. A groove 827 is provided around the first valve body 98 on the first passage 94. The fluid enters and exits between the first chamber 91 and the second chamber 92 through the groove 827. When the pressure in the first chamber 91 is large, the first valve body 98 closes the first passage 94. In that case, the inflow and outflow of the fluid is prevented between the first chamber 91 and the second chamber 92.

The third chamber 93 communicates with the first chamber 91 through the second passage 95. A second valve body 99 is arranged in the second passage 95. The second valve body 99 opens and closes the second passage 95 according to the pressure in the first chamber 91. The second valve body 99 is urged by the urging member 100. The second valve body 99 is urged in a direction of closing the second passage 95. The urging member 100 is, for example, a spring. When the pressure in the first chamber 91 is small, the second valve body 99 closes the second passage 95 by the urging force of the urging member 100. In that case, the inflow and outflow of the fluid is prevented between the first chamber 91 and the third chamber 93. When the pressure in the first chamber 91 is large, the second valve body 99 opens the second passage 95. When the second passage 95 is open, the fluid can enter and exit between the first chamber 91 and the third chamber 93. The second chamber 92 and the third chamber 93 communicate with each other through the third passage 96. The third chamber 93 communicates with a space in the connecting pipe 83 through the fourth passage 97.

A seal member 84 is attached to the rollover valve 80. The seal member 84 is made of elastic material such as rubber. The seal member 84 is arranged between the tank intake port 39 and the valve intake port 81. The seal member 84 is compressed between the rollover valve 80 and the fuel tank 23 by attaching the support 34 to the fuel tank 23.

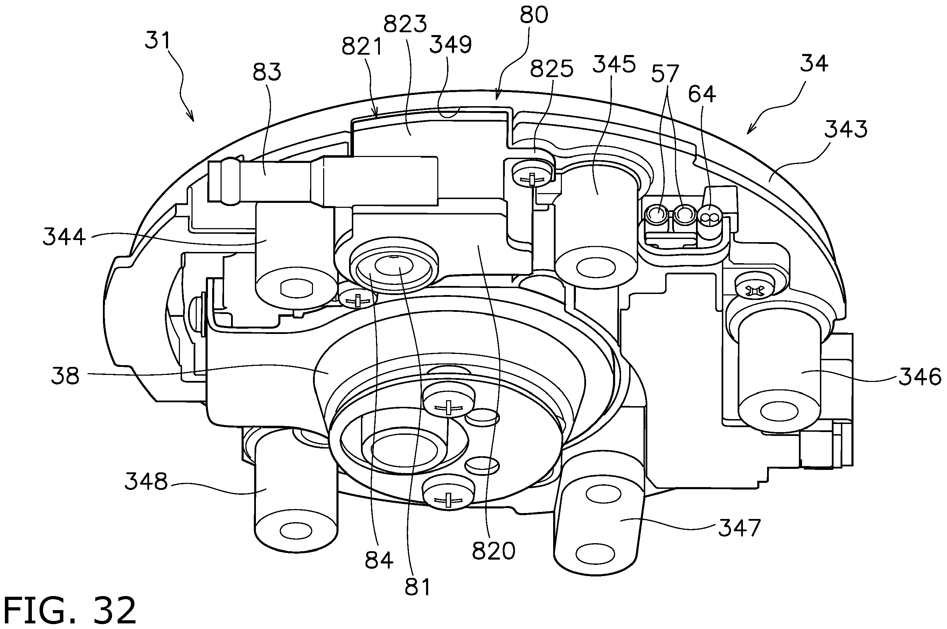

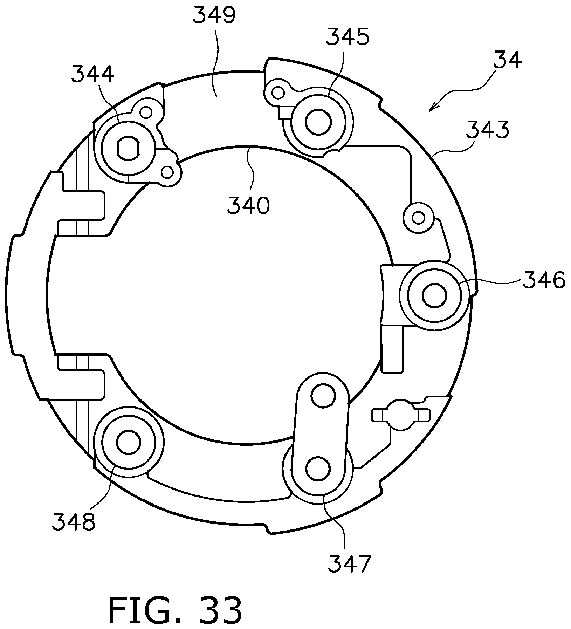

FIG. 32 is a perspective view of the fuel cap unit 31. As illustrated in FIG. 32, the rollover valve 80 is attached to the lower surface of the support 34. FIG. 33 is a bottom view of the support 34. As illustrated in FIG. 33, the support 34 includes a main body 343 and a plurality of bosses 344 to 348. The main body 343 has an annular shape. The main body 343 includes the opening 340 described above. The rollover valve 80 is fixed to the lower surface of the main body 343.

The plurality of bosses 344 to 348 project downward from the main body 343. The plurality of holes 341 of the support 34 described above extend through the plurality of bosses 344 to 348 and the main body 343. The plurality of bosses 344 to 348 are connected to the fuel tank 23. The plurality of bosses 344 to 348 are arranged apart from each other in the circumferential direction of the main body 343. The plurality of bosses 344 to 348 include first to fifth bosses 344 to 348. The first boss 344 and the second boss 345 are arranged on one lateral side of the opening 340. The fourth boss 347 and the fifth boss 348 are arranged on the other lateral side of the opening 340. The third boss 346 is arranged in front of the opening 340.

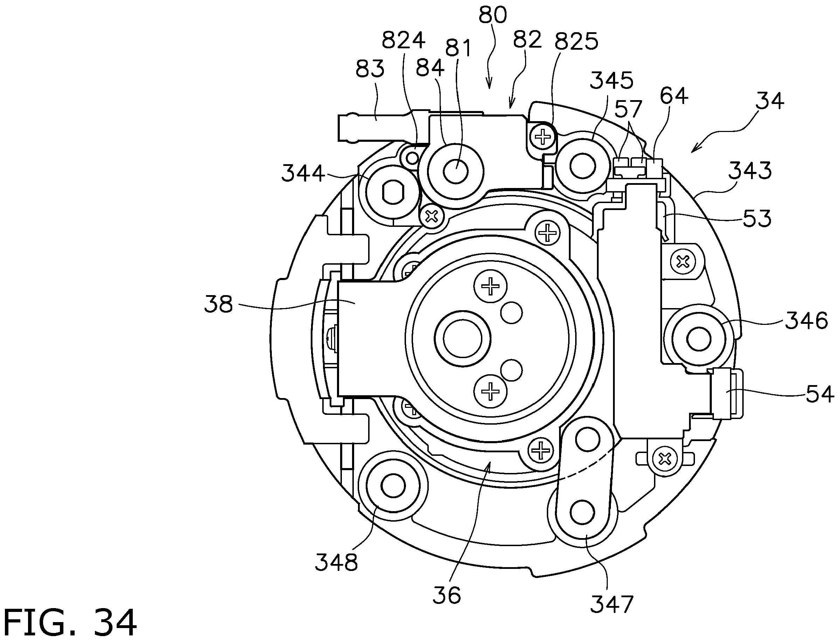

The second boss 345 is arranged apart from the first boss 344 in the circumferential direction of the main body 343. FIG. 34 is a bottom view of the fuel cap unit 31. As illustrated in FIG. 34, the rollover valve 80 is arranged between the first boss 344 and the second boss 345. The lower surface of the support 34 includes a recess 349 recessed upward. A part of the rollover valve 80 is arranged in the recess 349. Specifically, the upper surface 821 of the main body 343 of the rollover valve 80 is arranged in the recess 349.

The rollover valve 80 is fixed to the main body 343 at the first mounting portion 824 and the second mounting portion 825. The rollover valve 80 is fixed to the first boss 344 at the third mounting portion 826. The first to third mounting portions 824 to 826 are fixed to the support 34 by, for example, screws. The solenoid 53 described above is arranged between the second boss 345 and the third boss 346. The sensor 54 is arranged between the third boss 346 and the fourth boss 347.

When the power unit 6 of the straddled vehicle 1 is stopped, the rollover valve 80 is in a first open state illustrated in FIG. 30. In the first open state, the first passage 94 is open and the second passage 95 is closed. Therefore, the fuel tank 23 and the connecting pipe 83 communicate with each other through the valve intake port 81, the first chamber 91, the first passage 94, the second chamber 92, the third passage 96, the third chamber 93, and the fourth passage 97. Therefore, fluid can flow between the fuel tank 23 and the canister 76 through the rollover valve 80. Therefore, fuel vapor can flow between the fuel tank 23 and the canister 76. The rollover valve 80 is also in the first open state when the inside of the fuel tank 23 is in a negative pressure. In this case, fuel vapor flows from the canister 76 to the fuel tank 23 through the rollover valve 80.

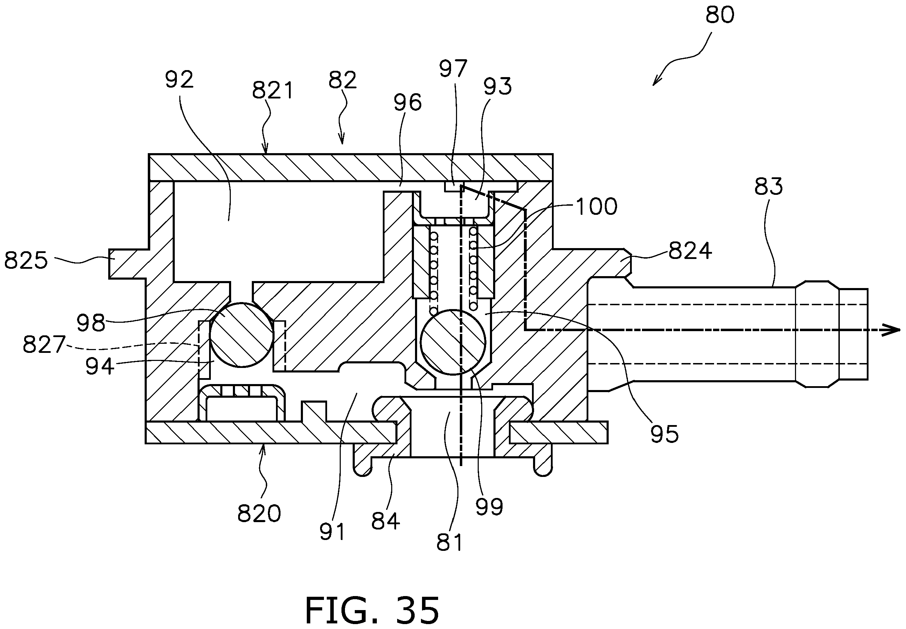

When the internal pressure of the fuel tank 23 increases due to the increase of fuel vapor in the fuel tank 23, the rollover valve 80 is in a second open state illustrated in FIG. 35. In the second open state, the first passage 94 is closed and the second passage 95 is open. Therefore, the fuel tank 23 and the connecting pipe 83 communicate with each other through the valve intake port 81, the first chamber 91, the second passage 95, the third chamber 93, and the fourth passage 97. Therefore, fuel vapor flows from the fuel tank 23 through the rollover valve 80 to the canister 76. As a result, an increase in the internal pressure of the fuel tank 23 is suppressed.

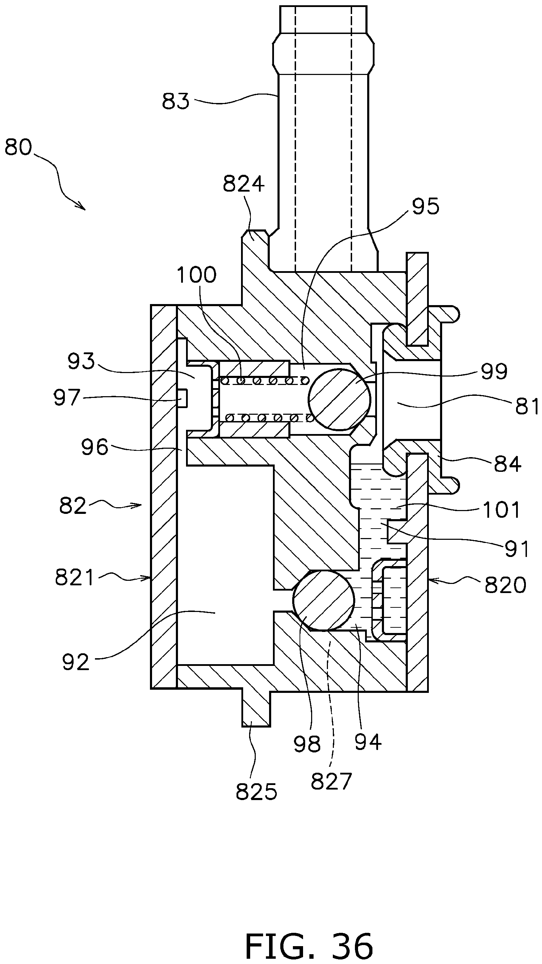

When the straddled vehicle 1 falls, the rollover valve 80 is in the closed state illustrated in FIG. 36. In the closed state, both the first passage 94 and the second passage 95 are closed. As illustrated in FIG. 36, when the straddled vehicle 1 falls, fuel 101 such as gasoline flows from the fuel tank 23 into the first chamber 91 of the rollover valve 80. In this state, the first valve body 98 closes the first passage 94 due to the pressure of the fuel 101 in the first chamber 91. The second valve body 99 closes the second passage 95 by the urging force of the urging member 100. In the closed state, the rollover valve 80 prevents the flow of fuel from the first chamber 91 to the second chamber 92 and the third chamber 93. Thereby, the rollover valve 80 prevents the flow of fuel between the fuel tank 23 and the canister 76. As a result, the outflow of fuel to the outside is prevented.

In the straddled vehicle 1 according to the present embodiment described above, the rollover valve 80 is sandwiched between the support 34 and the fuel tank 23 to be directly connected to the tank intake port 39 without using a hose or a pipe. Therefore, the tank cover 26 can be arranged close to the fuel tank 23. As a result, it is possible to secure a large capacity of the fuel tank 23 while suppressing the increase in size of the straddled vehicle 1.

Although one embodiment of the present invention has been described above, the present invention is not limited to the above embodiment, and various modifications can be made without departing from the gist of the invention.

The straddled vehicle 1 is not limited to the scooter, and may be another type of vehicle such as a moped. The structure of the straddled vehicle 1 is not limited to that of the above embodiment, and may be changed. The number of front wheels is not limited to one, and may be more than one. The number of rear wheels is not limited to one, and may be more than one. The structure of the vehicle body frame 2 is not limited to that of the above embodiment, and may be changed. For example, the shape of the main frame 12 may be changed.

The structure of the fuel cap unit 31 is not limited to that of the above embodiment, and may be changed. For example, the shape of the support 34 may be changed. The shape of the cap 36 may be changed. The shape of the operating member 37 may be changed. The shape of the slider 44 may be changed. The shape of the clutch member 49 may be changed. The clutch member 49 may be omitted. The shapes of the first slider 47 and the second slider 48 may be changed. The first slider 47 and the second slider 48 may be integrated with each other.

The configuration of the solenoid 53 and the sensor 54 may be changed. Alternatively, the solenoid 53 and the sensor 54 may be omitted. The configurations of the receiver 71, the power switch 72, the alarm device 73, and the controller 74 may be changed. Alternatively, the receiver 71, the power switch 72, the alarm device 73, and the controller 74 may be omitted.

The structure of the rollover valve 80 is not limited to that of the above embodiment, and may be changed. For example, the outer shape of the valve body 82 may be changed. The internal structure of the valve body 82 may be changed. The arrangement of the rollover valve 80 may be changed. The arrangement of the charge hose 77 and the canister 76 may be changed.

### REFERENCE SIGNS LIST

5: Seat, 6: Power unit, 11: Head pipe, 21: Storage box, 23: Fuel tank, 26: Tank cover, 33: Fuel filler port, 34: Support, 36: Cap, 39: Tank intake port, 80: Rollover valve, 84: Seal member, 77: Charge hose, 76: Canister, 81: Valve intake port, 82: Valve body, 83: Connecting pipe,340: Opening, 343: Main body, 344: First boss, 345: Second boss, 349: Recess, 822: Inner side surface, 823: Outer side surface.

It will be appreciated that the term 'straddled vehicle' or 'straddled motor vehicle' used herein, and as used in the art, is meant to include at least the following terms also used in the art:
straddled vehicle or motor vehicle, straddle-type vehicle or motor vehicle, saddle-straddling type vehicle or motor vehicle, and includes: motorcycles and motorbikes as well as motor tricycles, quad bikes and All Terrain Vehicles (ATVs), scooters, mopeds and snowmobiles.

## Claims

1. A straddled vehicle (1) comprising:
a fuel tank (23) comprising or including a fuel filler port (33) and a tank intake port (39);
a cover (26) that covers the fuel tank;
a support (34) attached to the fuel tank and arranged around the fuel filler port;
a cap (26) that is movably attached to the support to an open position and a closed position, opens the fuel filler port at the open position, and closes the fuel filler port at the closed position;
a charge hose (77) connected to a
rollover valve and arranged outside the fuel tank; and
a canister (76) connected to the charge hose, **characterized in that** the rollover valve (80) comprises or includes a valve intake port connected to the tank intake port, the rollover valve being attached to the support and sandwiched between the support and the fuel tank.

2. The straddled vehicle according to claim 1, wherein the rollover valve overlaps with the tank intake port as seen in an axial direction of the fuel filler port.

3. The straddled vehicle according to claim 1 or 2, wherein the rollover valve overlaps with the support as seen in the axial direction of the fuel filler port.

4. The straddled vehicle according to any one of claims 1 to 3, wherein the rollover valve comprises or includes:
a valve body (82) comprising or including the valve intake port, and
a connecting pipe (83) protruding from the valve body and connected to the charge hose,
the valve body overlaps with the support as seen in the axial direction of the fuel filler port, and
the connecting pipe projects from the support as seen in the axial direction of the fuel filler port.

5. The straddled vehicle according to any one of claims 1 to 4, wherein the support comprises or includes:
a main body (343) having an annular shape, and
a first boss (344) that projects from the main body and is connected to the fuel tank,
a second boss (345) that projects from the main body, is arranged apart from the first boss in a circumferential direction of the main body, and is connected to the fuel tank, and
the rollover valve is arranged between the first boss and the second boss.

6. The straddled vehicle according to any one of claims 1 to 5, wherein the rollover valve is fixed to a lower surface of the main body.

7. The straddled vehicle according to any one of claims 1 to 6, wherein:
the support comprises or includes an opening (340) having a circular shape,
the opening faces the fuel filler port, and
the rollover valve comprises or includes an inner side surface (822) that curves along an edge of the opening.

8. The straddled vehicle according to any one of claims 1 to 7, wherein:
the support has a circular outer shape, and
the rollover valve comprises or includes an outer side surface (823) that curves along the circular outer shape of the support.

9. The straddled vehicle according to any one of claims 1 to 8, wherein
a lower surface of the support comprises or includes a recess that is recessed upward, and
a part of the rollover valve is arranged in the recess.

10. The straddled vehicle according to any one of claims 1 to 9, further comprising:
a seal member (84) arranged between the tank intake port and the valve intake port, wherein
the seal member is compressed between the rollover valve and the fuel tank by attaching the support to the fuel tank.

11. The straddled vehicle according to any one of claims 1 to 10, further comprising:
a head pipe (11) arranged in front of the fuel tank;
a seat (5) at least partially arranged behind the fuel tank;
a storage box (21) arranged below the seat and behind the fuel tank;
a center cover (27) arranged between the head pipe and the seat, the center cover having a downwardly recessed shape between the fuel tank and the head pipe; and
a power unit (6) arranged below the fuel tank.

## Patentansprüche

1. Grätschsitzfahrzeug (1), umfassend:
einen Kraftstofftank (23), welcher eine Kraftstofffüllöffnung (33) und eine Tankeinlassöffnung (39) umfasst oder einschließt;
eine Abdeckung (26), welche den Kraftstofftank abdeckt;
einen Träger (34), welche an dem Kraftstofftank befestigt ist und um die Kraftstofffüllöffnung angeordnet ist;
eine Kappe (26), welche beweglich an dem Träger zu einer offenen Position und einer geschlossenen Position befestigt ist, wobei sie die Kraftstofffüllöffnung in der offenen Position öffnet und die Kraftstofffüllöffnung in der geschlossenen Position schließt;
einen Ladeschlauch (77), welcher mit einem Überschlagventil verbunden ist und außerhalb des Kraftstofftanks angeordnet ist; und
einen Behälter (76), welche mit dem Ladeschlauch verbunden ist, **dadurch gekennzeichnet, dass** das Überschlagventil (80) eine Ventileinlassöffnung umfasst oder einschließt, welche mit der Tankeinlassöffnung verbunden ist, wobei das Überschlagventil mit dem Träger befestigt ist und zwischen dem Träger und dem Kraftstofftank sandwichartig eingelegt ist.

2. Grätschsitzfahrzeug nach Anspruch 1, wobei das Überschlagventil die Tankeinlassöffnung überlappt, wie gesehen in einer axialen Richtung der Kraftstofffüllöffnung.

3. Grätschsitzfahrzeug nach Anspruch 1 oder 2, wobei das Überschlagventil den Träger überlappt, wie gesehen in der axialen Richtung der Kraftstofffüllöffnung.

4. Grätschsitzfahrzeug nach einem der Ansprüche 1 bis 3, wobei das Überschlagventil Folgendes umfasst oder einschließt:
einen Ventilkörper (82), welcher die Ventileinlassöffnung umfasst oder einschließt, und
ein Verbindungsrohr (83), welches von dem Ventilkörper vorsteht und mit dem Ladeschlauch verbunden ist,
wobei der Ventilkörper den Träger überlappt, wie gesehen in der axialen Richtung der Kraftstofffüllöffnung, und
das Verbindungsrohr von dem Träger vorsteht, wie gesehen in der axialen Richtung der Kraftstofffüllöffnung gesehen.

5. Grätschsitzfahrzeug nach einem der Ansprüche 1 bis 4, wobei der Träger Folgendes umfasst oder einschließt:
einen Hauptkörper (343) mit einer Ringform; und
einen ersten Vorsprung (344), welcher von dem Hauptkörper vorsteht und mit dem Kraftstofftank verbunden ist,
einen zweiten Vorsprung (345), welcher von dem Hauptkörper vorsteht, beabstandet von dem ersten Vorsprung in einer Umfangsrichtung des Hauptkörpers angeordnet ist und mit dem Kraftstofftank verbunden ist, und
das Überschlagventil zwischen dem ersten Vorsprung und dem zweiten Vorsprung angeordnet ist.

6. Grätschsitzfahrzeug nach einem der Ansprüche 1 bis 5, wobei das Überschlagventil an einer untern Fläche des Hauptkörpers befestigt ist.

7. Grätschsitzfahrzeug nach einem der Ansprüche 1 bis 6, wobei:
der Träger eine Öffnung (340) mit einer Ringform umfasst oder einschließt,
die Öffnung der Kraftstofffüllöffnung zugewandt ist, und
das Überschlagventil eine innere Seitenfläche (822) umfasst oder einschließt, welche sich entlang eines Randes der Öffnung krümmt.

8. Grätschsitzfahrzeug nach einem der Ansprüche 1 bis 7, wobei:
der Träger eine kreisförmige Außenform aufweist, und
das Überschlagventil eine äußere Seitenfläche (823) umfasst oder einschließt, welche sich entlang der kreisförmigen Außenform des Trägers krümmt.

9. Grätschsitzfahrzeug nach einem der Ansprüche 1 bis 8, wobei
eine untere Fläche des Trägers eine Ausnehmung umfasst oder einschließt, welche nach oben ausgenommen ist und
ein Teil des Überschlagventils in der Ausnehmung angeordnet ist.

10. Grätschsitzfahrzeug nach einem der Ansprüche 1 bis 9, ferner umfassend:
ein Dichtungselement (84), welches zwischen der Tankeinlassöffnung und der Ventileinlassöffnung angeordnet ist, wobei
das Dichtungselement zwischen dem Überschlagventil und dem Kraftstofftank komprimiert ist, indem der Träger an den Kraftstofftank befestigt wird.

11. Grätschsitzfahrzeug nach einem der Ansprüche 1 bis 10, ferner umfassend:
ein Kopfrohr (11), welches vor dem Kraftstofftank angeordnet ist;
einen Sitz (5), welcher mindestens teilweise hinter dem Kraftstofftank angeordnet ist;
einen Stauraum (21), welcher unterhalb des Sitzes und hinter dem Kraftstofftank angeordnet ist;
eine zentrale Abdeckung (27), welche zwischen dem Kopfrohr und dem Sitz angeordnet ist, wobei die zentrale Abdeckung eine nach unten ausgenommene Form zwischen dem Kraftstofftank und dem Kopfrohr aufweist; und
eine Antriebseinheit (6), welche unterhalb des Kraftstofftanks angeordnet ist.

## Revendications

1. Véhicule à enfourcher (1), comprenant :
un réservoir de carburant (23) comprenant ou incluant un orifice de remplissage de carburant (33) et un orifice d'admission du réservoir (39) ;
un couvercle (26) qui recouvre le réservoir de carburant ;
un support (34) fixé sur le réservoir de carburant et agencé autour de l'orifice de remplissage de carburant ;
un capuchon (26), qui est fixé de manière mobile au support pour passer dans une position ouverte et dans une position fermée, ouvre l'orifice de remplissage de carburant au niveau de la position ouverte et ferme l'orifice de remplissage de carburant au niveau de la position fermée :
un tuyau de charge (77) connecté à un clapet antifuite est agencé à l'extérieur du réservoir de carburant ; et
un bidon (76) connecté au tuyau de charge, **caractérisé en ce que** le clapet antifuite (80) comprend ou inclut un orifice d'admission du clapet connecté à l'orifice d'admission du réservoir, le clapet antifuite étant fixé sur le support et étant pris en sandwich entre le support et le réservoir de carburant.

2. Véhicule à enfourcher selon la revendication 1, dans lequel le clapet antifuite chevauche l'orifice de remplissage du réservoir, vu dans une direction axiale de l'orifice de remplissage de carburant.

3. Véhicule à enfourcher selon la revendication 1 ou 2, dans lequel le clapet antifuite chevauche le support, vu dans la direction axiale de l'orifice de remplissage du carburant.

4. Véhicule à enfourcher selon l'une quelconque des revendications 1 à 3, dans lequel le clapet antifuite comprend ou inclut :
un corps de clapet (82) comprenant ou incluant l'orifice d'admission du clapet ; et
un tube de raccordement (83) faisant saillie à partir du corps du clapet et connecté au tuyau de charge ;
le corps du clapet chevauche le support, vu dans la direction axiale de l'orifice de remplissage du carburant, et
le tube de raccordement faisant saillie à partir du support, vu dans la direction axiale de l'orifice de remplissage de carburant.

5. Véhicule à enfourcher selon l'une quelconque des revendications 1 à 4, dans lequel le support comprend ou inclut :
un corps principal (343) ayant une forme annulaire ; et
un premier bossage (344) qui fait saillie à partir du corps principal et est connecté au réservoir de carburant ;
un deuxième bossage (345), qui fait saillie à partir du corps principal, est agencé à l'écart du premier bossage dans une direction circonférentielle du corps principal, et est connecté au réservoir de carburant ; et
le clapet antifuite est agencé entre le premier bossage et le deuxième bossage.

6. Véhicule à enfourcher selon l'une quelconque des revendications 1 à 5, dans lequel le clapet antifuite est fixé sur une surface inférieure du corps principal.

7. Véhicule à enfourcher selon l'une quelconque des revendications 1 à 6, dans lequel :
le support comprend ou inclut une ouverture (340) ayant une forme circulaire ;
l'ouverture fait face à l'orifice de remplissage de carburant ; et
le clapet antifuite comprend ou inclut une surface latérale interne (822) incurvée le long d'un bord de l'ouverture.

8. Véhicule à enfourcher selon l'une quelconque des revendications 1 à 7, dans lequel :
le support a une forme externe circulaire ; et
le clapet antifuite comprend ou inclut une surface latérale externe (823) incurvée le long de la forme circulaire externe du support.

9. Véhicule à enfourcher selon l'une quelconque des revendications 1 à 8, dans lequel :
une surface inférieure du support comprend ou inclut un évidement qui est évidé vers le haut ; et
une partie du clapet antifuite est agencée dans l'évidement.

10. Véhicule à enfourcher selon l'une quelconque des revendications 1 à 9, comprenant en outre :
un élément d'étanchéité (84) agencé entre l'orifice d'admission du réservoir et l'orifice d'admission du clapet ; dans lequel :
l'élément d'étanchéité est comprimé entre le clapet antifuite et le réservoir de carburant en fixant le support sur le réservoir de carburant.

11. Véhicule à enfourcher selon l'une quelconque des revendications 1 à 10, comprenant en outre :
un tube de tête (11) agencé devant le réservoir de carburant ;
un siège (5) agencé au moins partiellement derrière le réservoir de carburant ;
un coffre de rangement (21) agencé au-dessous du siège et derrière le réservoir de carburant ;
un couvercle central (27) agencé entre le tube de tête et le siège, le couvercle central ayant une forme évidée vers le bas entre le réservoir de carburant et le tube de tête ; et
une unité de puissance (6) agencée au-dessous du réservoir de carburant.
